# EUROPÄISCHE PATENTSCHRIFT

(11) **EP 0 538 515 B1**
(45) Veröffentlichungstag und Bekanntmachung des Hinweises auf die Patenterteilung: **22.02.1995**
(21) Anmeldenummer: 91119675.6
(22) Anmeldetag: 19.11.1991
(51) Int. Cl.: B23B 3/16

(54) **Drehmaschine**
Lathe
Tour

(30) Priorität: 19.10.1991 DE 4134615
(43) Veröffentlichungstag der Anmeldung: 28.04.1993
(73) Patentinhaber: INDEX-WERKE GMBH & CO. KG HAHN & TESSKY, D-73726 Esslingen (DE)
(72) Erfinder: Link, Helmut Friedrich, W-7307 Aichwald 1 - Schanbach (DE)
(74) Vertreter: Hoeger, Stellrecht & Partner

(56) Entgegenhaltungen:
- EP-A- 191 739
- EP-A- 239 564
- EP-A- 0 259 637
- DE-A- 1 502 023
- DE-A- 2 151 070
- DE-A- 3 834 342
- DE-C- 3 221 513
- DE-U- 8 233 456

## Beschreibung

Die Erfindung betrifft eine Drehmaschine, insbesondere eine CNC-Drehmaschine, mit einer eine Z-Achse definierenden Werkstückspindel sowie einem Werkzeugträger-Schlitten, welcher einen Werkzeugträger in Gestalt eines einen Revolverkörper und einen Revolverkopf aufweisenden Werkzeugrevolvers trägt und in Richtung einer ersten, quer zur Z-Achse verlaufenden Achse (X-Achse) verschiebbar ist, wobei Werkstückspindel und Werkzeugträger-Schlitten in Richtung der bzw. parallel zur Z-Achse relativ zueinander verschiebbar sind.

Aufgrund der Forderung, in einer Drehmaschine die Werkstücke möglichst komplett bearbeiten zu können, werden in den Werkzeugrevolvern von Drehmaschinen immer mehr angetriebene Werkzeuge eingesetzt. Die Zerspanungsleistung dieser angetriebenen Revolverwerkzeuge ist aber aufgrund des in einem Revolverkopf zur Verfügung stehenden Bauraumes und des notwendigerweise langen Antriebsstranges stark begrenzt - bei bekannten Revolver-Drehautomaten treibt ein auf dem den Werkzeugrevolver tragenden Schlitten angebrachter Motor eine zentrale Antriebswelle an, die konzentrisch zur Schaltachse des Revolverkopfs verläuft, im Revolverkopf endet und dort mit einem Kegelrad versehen ist, mit dem Kegelräder sternförmig angeordneter, im Revolverkopf drehbar gelagerter Werkzeugspindeln kämmen; aufgrund des geringen, im Revolverkopf zur Verfügung stehenden Bauraumes sind diese Kegelräder notwendigerweise verhältnismäßig klein, und alle Revolverwerkzeuge werden mit derselben Drehzahl angetrieben.

Für angetriebene Werkzeuge hoher Zerspanungsleistung ging man deshalb den Weg, anstelle eines Werkzeugrevolvers einen Werkzeugträger mit nur einer antreibbaren Werkzeugspindel vorzusehen. Dies hat aber den Nachteil, daß nach jedem Arbeitsgang ein Werkzeugwechsel durchgeführt werden muß, was zu einem ungünstigen Verhältnis zwischen Bearbeitungszeiten und Nebenzeiten, in denen Werkstücke nicht bearbeitet werden können, führt.

Typisch für den zuletzt erwähnten Konstruktionstrend ist die Drehmaschine nach der EP-0 259 637-B, welche einen in Richtung der Z-Achse verschieblichen Spindelkasten zur Lagerung einer Werkstückspindel sowie einen Werkzeugträger-Schlitten besitzt, der seinerseits von einem in Richtung der X-Achse verschiebbaren Unterschlitten getragen wird. In letzterem ist der als Pinole ausgebildete Werkzeugträger-Schlitten in Richtung der Y-Achse, welche senkrecht auf der von der X-Achse und der Z-Achse definierten Ebene steht, verschiebbar und um die Y-Achse drehbar gelagert, so daß der auf dem Werkzeugträger-Schlitten angebrachte Werkzeugträger eine B-Achse hat. In diesem Werkzeugträger ist eine antreibbare Werkzeugspindel z. B. für ein Fräswerkzeug derart gelagert, daß die Spindelachse quer zur Y-Achse verläuft. Oberhalb des von dem Unterschlitten und der Pinole gebildeten Kreuzschlittensystems besitzt diese bekannte Drehmaschine ein Werkzeugmagazin, dem ein Werkzeugwechsler zugeordnet ist, um so nach einem Schwenken des Werkzeugträgers um 180° um die B- bzw. Y-Achse das in der Werkzeugspindel gehaltene Werkzeug wechseln zu können.

Aus der EP-0 185 011-B ist ein Revolver-Drehautomat bekannt, dessen Revolverkopf wenigstens eine Werkzeugaufnahme für ein angetriebenes Werkzeug, insbesondere ein Fräswerkzeug, aufweist. Diese bekannte Drehmaschine verfolgt den Zweck, eine echte Y-Achse eines Werkzeugträger-Schlittensystems durch ein mit einem Planvorschub koordiniertes Verschwenken des Werkzeugrevolvers um eine B-Achse und/oder Drehen des Revolverkopfs um seine Schaltachse zu ersetzen. Zu diesem Zweck ist der Werkzeugrevolver auf einem Kreuzschlittensystem mit einer Z- und einer X-Achse angeordnet, ein Revolverkörper ist auf dem Oberschlitten dieses Kreuzschlittensystems um die Y-Achse schwenkbar angebracht und besitzt infolgedessen eine B-Achse, und der Revolverkopf ist um eine quer zur Y-Achse verlaufende Schaltachse (A-Achse) drehbar am Revolverkörper gehalten. Diese bekannte Drehmaschine hat deshalb den eingangs erwähnten Nachteil, daß sich nämlich am Revolverkopf nur Werkzeuge mit verhältnismäßig geringer Zerspanungsleistung unterbringen lassen. Hinzukommt, daß auch ein an einem Revolverkopf angebrachtes, nicht-angetriebenes Werkzeug mit hoher Zerspanungsleistung, wie z. B. eine Bohrstange, nicht voll befriedigen kann, weil die an einem solchen Werkzeug auftretenden hohen Kräfte die Herstellung hoch-präziser Werkstücke verhindern - in diesem Zusammenhang muß man sich vor Augen halten, daß ein solcher Revolverkopf am Revolverkörper nicht nur um seine Schaltachse drehbar, sondern üblicherweise auch in Richtung der Schaltachse verschiebbar gehalten werden muß, weil der Revolverkopf am Revolverkörper gegen ein unbeabsichtigtes Verdrehen verriegelbar sein muß, was im allgemeinen mit zwei Planverzahnungen bewerkstelligt wird, die bei verriegeltem Revolverkopf ineinandergreifen und zum Drehen des Revolverkopfs durch eine Verschiebung des letzteren in Richtung seiner Schaltachse voneinander getrennt werden.

Schließlich ist ein Revolver-Drehautomat bekannt (DE-32 21 513-C), dessen Revolverkopf nur mit nicht-antreibbaren Drehwerkzeugen bestückt und dessen Revolverkörper mit einem Antriebsmotor für vom Revolverkörper gehaltene antreibbare Werkzeuge versehen ist. Bei dieser bekannten Drehmaschine ist der Revolverkörper auf einem Kreuzschlittensystem mit einer X- und einer Z-Achse angeordnet, die Schaltachse des Revolverkopfs verläuft normalerweise parallel zur Z-Achse, im Revolverkörper ist eine normalerweise parallel zur X-Achse ausgerichtete, durch den Antriebsmotor antreibbare erste Werkzeugspindel gelagert und schließlich ist am Revolverkörper ein Zusatzaggregat angelenkt, in dem eine in der Arbeitsposition dieses Zusatzaggregats parallel zur Schaltachse des Revolverkopfs verlaufende zweite Werkzeugspindel gelagert ist. Die im Revolverkörper gelagerte erste Werkzeugspindel, welche mit der Abtriebswelle des Antriebsmotors fluchtet, verläuft quer zur Revolverkopf-Schaltachse und ein von ihr gehaltenes Werkzeug muß entfernt werden, um das Zusatzaggregat aus einer Ruheposition, in der es auf der vom Revolverkopf abgewandten Seite des Revolverkörpers liegt, um eine senkrecht zur X- und zur Z-Achse verlaufende Schwenkachse um 180° in seine Arbeitsposition schwenken zu können, in der es neben dem Revolverkopf liegt, wobei ein von der zweiten Werkzeugspindel gehaltenes Werkzeug - vom Revolverkörper aus gesehen - in dieselbe Richtung weist wie der Revolverkopf. In der Arbeitsstellung des Zusatzaggregats ist ein in diesem angeordnetes Winkelgetriebe zum Antrieb der zweiten Werkzeugspindel mit der ersten Werkzeugspindel gekuppelt. Schließlich ist bei dieser bekannten Drehmaschine der Revolverkörper auf dem Oberschlitten seines Kreuzschlittensystems um eine Achse schwenkbar angebracht, welche senkrecht zu der von der X- und der Z-Achse definierten Ebene verläuft. Nachteilig an dieser bekannten Drehmaschine ist nicht nur, daß erhebliche Nebenzeiten, innerhalb welcher nicht gearbeitet werden kann, unvermeidbar sind, wenn mit dem Zusatzaggregat gearbeitet werden soll, sondern auch die auf die Art der Anbringung des Zusatzaggregats zurückzuführenden Beschränkungen in der Bearbeitungsgenauigkeit beim Arbeiten mit dem Zusatzaggregat; ferner ist man in der Bestückung des Revolverkopfs mit Werkzeugen beschränkt, z. B. deshalb, weil das Zusatzaggregat in seiner Arbeitsposition neben dem Revolverkopf liegt und sich dieser infolgedessen nicht mit sich radial zur Revolverkopf-Schaltachse erstreckenden Werkzeugen bestücken läßt.

Diesen Nachteil besitzt die aus dem DE-U-82 33 456 bekanntgewordene Drehmaschine nicht, bei der ein Zusatzaggregat mit einer antreibbaren Werkzeugspindel auf der vom Revolverkopf abgewandten Seite des Revolverkörpers angeordnet ist. Der Werkzeugrevolver, dessen Revolverkopf ausschließlich Drehwerkzeuge, d. h. nicht-angetriebene Werkzeuge trägt, ist auf einem Kreuzschlittensystem mit Z- und X-Achse angeordnet, und zwar um eine zur Z- und X-Achse senkrechte Achse, d. h. um eine B-Achse schwenkbar. Um z. B. mit einem von der Werkzeugspindel des Zusatzaggregats gehaltenen Bohrer außermittig, d. h. nicht in der Achse der Werkstückspindel, bohren zu können, ist bei dieser bekannten Drehmaschine das mit einem eigenen Antriebsmotor versehene Zusatzaggregat auf einem Schlitten angebracht, der am Revolverkörper senkrecht zur Z- und zur X-Achse, d. h. in Richtung der Y-Achse, verschiebbar geführt ist. Außerdem ist das Zusatzaggregat um eine zur Schaltachse des Revolverkopfs parallele Achse schwenkbar auf diesem Schlitten angebracht. Diese Drehmaschine besitzt also im wesentlichen dieselben Nachteile wie der vorstehend erörterte Drehmaschine nach der EP-B-0 185 011.

Der Erfindung lag die Aufgabe zugrunde, einen mit einem Werkzeugzeugrevolver versehenen Drehautomaten zu schaffen, welcher einerseits vielfältige Bearbeitungsmöglichkeiten bietet und andererseits unter Beibehaltung des Vorteils der Drehmaschine nach dem DE-U-82 33 456, daß nämlich das Arbeiten mit dem Zusatzaggregat nicht zu Beschränkungen bei der Bestückung des Revolverkopfs mit Werkzeugen führt, es erlaubt, mit Werkzeugen hoher Zerspanungsleistung hoch-präzise zu arbeiten.

Ausgehend von einer Drehmaschine, wie sie das DE-U-82 33 456 zeigt, d. h. von einer Drehmaschine mit einer eine Z-Achse definierenden Werkstückspindel sowie einem Werkzeugträger-Schlitten, welcher einen Werkzeugträger in Gestalt eines einen Revolverkörper und einen Revolverkopf aufweisenden Werkzeugrevolvers trägt und in Richtung einer ersten, quer zur Z-Achse verlaufenden Achse verschiebbar ist, wobei Werkstückspindel und Werkzeugträger-Schlitten in Richtung der Z-Achse relativ zueinander verschiebbar sind, der Werkzeugrevolver um eine zweite, gleichfalls quer zur Z-Achse sowie quer zur X-Achse verlaufende Achse (Y-Achse) schwenkbar und der Revolverkopf um eine quer zur Y-Achse verlaufende Schaltachse drehbar am Revolverkörper angebracht ist, und mit ersten Werkzeugaufnahmen am Revolverkopf sowie einer vom Revolverkörper getragenen zweiten Werkzeugaufnahme, welche mit einem Antrieb für ein antreibbares Werkzeug versehen ist, läßt sich diese Aufgabe erfindungsgemäß dadurch lösen, daß die zweite Werkzeugaufnahme unmittelbar am Revolverkörper an dessen vom Revolverkopf abgewandten Seite angeordnet ist, daß der Revolverkopf mindestens eine mit einem Antrieb für ein antreibbares Werkzeug versehene erste Werkzeugaufnahme aufweist und daß für alle antreibbaren Werkzeuge ein gemeinsamer Antriebsmotor vorgesehen ist.

Ein von der zweiten Werkzeugaufnahme gehaltenes Werkzeug, welches bereits nach einem einfachen Schwenken des Revolverkörpers einsatzbereit ist, erlaubt eine Bearbeitung mit wesentlich höherer Genauigkeit als ein Werkzeug eines am Revolverkörper verschiebbar und/oder schwenkbar angebrachten Zusatzaggregats. Die Anordnung der zweiten Werkzeugaufnahme unmittelbar am Revolverkörper gestattet ein Arbeiten mit einem Werkzeug hoher Zerspanungsleistung, insbesondere mit höherer Zerspanungsleistung als diejenige eines vom Revolverkopf gehaltenen angetriebenen Werkzeugs, und zwar ohne Einbußen bei der Bearbeitungsgenauigkeit. Obwohl auch der Revolverkopf wenigstens ein angetriebenes Werkzeug tragen kann und infolgedessen die erfindungsgemäße Drehmaschine vielfältige Bearbeitungsmöglichkeiten bietet, läßt sich die erfindungsgemäße Drehmaschine wegen des allen antreibbaren Werkzeugen gemeinsamen Antriebsmotors verhältnismäßig kostengünstig herstellen, um so mehr, als der Antriebsmotor nicht wie bei der Drehmaschine nach dem DE-U-82 33 456 auf einem am Revolverkörper geführten Schlitten untergebracht werden muß. Wegen der Anordnung der zweiten Werkzeugaufnahme an der vom Revolverkopf abgewandten Seite des Revolverkörpers ermöglicht es die Erfindung auch, bei Drehmaschinen mit einer sogenannten Gegenspindel, d. h. mit einer in Richtung der Z-Achse der ersten Werkstückspindel gegenüberliegenden zweiten Werkstückspindel, mit den Werzeugen des Revolverkopfs ein von der einen Werkstückspindel gehaltenes Werkstück und mit einem von der zweiten Werkzeugaufnahme gehaltenen Werkzeug ein von der anderen Werkstückspindel gehaltenes Werkstück zu bearbeiten, und zwar sogar gleichzeitig, wenn eine der beiden Werkstückspindeln in Richtung der Z-Achse verschiebbar ist, und da der Werkzeugrevolver um die Y-Achse schwenkbar ist, kann sogar mit den Werkzeugen des Revolverkopfs bzw. mit einem von der zweiten Werkzeugaufnahme gehaltenen Werkzeug an jeder beliebigen der beiden Werkstückspindeln gearbeitet werden. Durch ein entsprechendes Getriebe bzw. durch entsprechende Getriebe zwischen dem allen antreibbaren Werkzeugen gemeinsamen Antriebsmotor und der zweiten Werkzeugaufnahme und/oder dem angetriebenen Werkzeug des Revolverkopfs läßt sich ohne weiteres bewerkstelligen, daß das unmittelbar am Revolverkörper vorgesehene angetriebene Werkzeug eine weit höhere Zerspanungsleistung besitzt als das vom Revolverkopf gehaltene angetriebene Werkzeug. Die erfindungsgemäße Drehmaschine kann also z. B. mit einer schweren Frässpindel ausgerüstet werden; in diesem Zusammenhang sei darauf hingewiesen, daß im Vergleich zu vom Revolverkopf gehaltenen angetriebenen Werkzeugen der Antriebsstrang für die zweite Werkzeugaufnahme wenigstens eine Umlenkung (Winkelgetriebe) weniger aufweist, da vom Revolverkopf gehaltene angetriebene Werkzeuge im allgemeinen im Bereich des Umfangs des Revolverkopfs angeordnet sind und eine dem Revolverkopf zugeordnete Antriebswelle für den Antrieb seiner Werkzeuge koaxial zur Revolverkopf-Schaltachse verläuft.

Bei einer mit einem Werkzeugrevolver ausgerüsteten Drehmaschine völlig anderer Gattung ist es an sich bereits bekannt (siehe EP-A-0 191 739), unmittelbar am Revolverkörper an dessen vom Revolverkopf abgewandten Seite ein nicht-antreibbares Werkzeug, nämlich einen Drehstahl, fest anzubringen. Bei dieser Drehmaschine ist die Werkstückspindel jedoch so ausgebildet, daß ein von der Werkstückspindel gehaltenes, stangenförmiges, zu bearbeitendes Werkstück beidseitig aus der Werkstückspindel und einem diese lagernden Spindelkasten herausragt, und der Werkzeugrevolver ist auf einem Kreuzschlitten angeordnet, der in Richtung der Z-Achse, d. h. der Werkstückspindelachse, seitlich am Spindelkasten und der Werkstückspindel vorbeifahren kann, um mit den Werkzeugen des Revolverkopfs das eine Werkstückende und mit dem am Revolverkörper fest angebrachten und in Richtung auf die Werkstückspindelachse weisenden Drehstahl das andere Werkstückende bearbeiten zu können. Da bei dieser bekannten Drehmaschine der Werkzeugrevolver nicht um eine senkrecht zur X- und zur Z-Achse verlaufende Achse (Y-Achse) geschwenkt werden kann, ist es unmöglich, an der einen oder der anderen Seite der Werkstückspindel bzw. des Spindelkastens sowohl mit einem Werkzeug des Revolverkopfs, als auch mit dem am Revolverkörper fest angebrachten Werkzeug zu arbeiten.

Vorzugsweise ist die zweite Werkzeugaufnahme am Revolverkörper derart angeordnet, daß ein von dieser zweiten Werkzeugaufnahme gehaltenes Werkzeug vom Revolverkopf wegweist. Dadurch wird besonders wirksam der Gefahr einer Kollision zwischen Werkstück, Werkstückspindel oder Spindelkasten einerseits und Werkzeugen andererseits begegnet, wenn mit Revolverkopf-Werkzeugen oder mit einem von der zweiten Werkzeugaufnahme gehaltenen Werkzeug gearbeitet wird.

Wie bei bekannten Revolver-Drehautomaten benötigt auch der Werkzeugträger-Schlitten der erfindungsgemäßen Drehmaschine oder deren die Werkstückspindel lagernde Spindelkasten nicht notwendigerweise eine Beweglichkeit in Richtung der Y-Achse, da der Werkzeugrevolver so angeordnet werden kann, daß eine sich in Arbeitsposition befindliche erste Werkzeugaufnahme und die Schaltachse eine Ebene definieren, in der auch die Werkstückspindelachse liegt. Die erfindungsgemäße Drehmaschine erlaubt jedoch vielfältigere Bearbeitungen, wenn Werkstückspindel und Werkzeugrevolver in Richtung der bzw. parallel zur Y-Achse relativ zueinander verschiebbar sind.

Um mit einem von der zweiten Werkzeugaufnahme gehaltenen Werkzeug sowohl axial, als auch radial (bezogen auf die mit der Z-Achse zusammenfallende Drehachse) arbeiten und den Revolverkopf sowohl als sogenannten Stern-, als auch als sogenannten Scheibenrevolver einsetzen zu können, sollte der Werkzeugrevolver um mindestens 90° um die Y-Achse schwenkbar sein.

Besitzt die erfindungsgemäße Drehmaschine sowohl am Revolverkopf mindestens ein antreibbares Werkzeug als auch eine antreibbare zweite Werkzeugaufnahme, ist es vorteilhaft, wenn der Antrieb für die zweite Werkzeugaufnahme ein höheres Drehmoment aufweist als der Antrieb für die erste Werkzeugaufnahme, was sich entweder mit zwei ensprechenden Antriebsmotoren oder mit einem gemeinsamen Antriebsmotor und entsprechenden Getriebeelementen erreichen läßt.

Bei einer erfindungsgemäßen Drehmaschine mit nur einer Werkstückspindel könnte der Spindelkasten oder -stock in Richtung der Z-Achse verschiebbar sein. Vorteilhafter, weil vor allem im Hinblick auf den Antrieb der Werkstückspindel einfacher, ist jedoch eine Ausführungsform, bei der der Werkzeugträger-Schlitten parallel zur Z-Achse verschiebbar ist. Entsprechendes gilt für die Verschiebbarkeit von Werkstückspindel und Werkzeugrevolver in Richtung der Y-Achse relativ zueinander, so daß bei bevorzugten Ausführungsformen der erfindungsgemäßen Drehmaschine der Werkzeugträger-Schlitten in Richtung der bzw. parallel zur Y-Achse verschiebbar ist - in diesem Zusammenhang sei angemerkt, daß Drehmaschinen mit in Richtung der Y-Achse verschiebbarem Spindelstock bekannt sind.

Wie bereits erwähnt, bringt die vorliegende Erfindung bei einer Anwendung auf sogenannte Gegenspindelmaschinen besondere Vorteile mit sich. Eine bevorzugte Ausführungsform der erfindungsgemäßen Drehmaschine zeichnet sich deshalb dadurch aus, daß in Richtung der Z-Achse der ersten Werkstückspindel eine zweite Werkstückspindel gegenüberliegt, wobei die mit Werkstück-Spannvorrichtungen versehenen Spindelenden einander zugekehrt sind, und daß die Werkstückspindeln in Richtung der Z-Achse relativ zueinander derart verschiebbar sind, daß ein von einer der Werkstückspindeln gehaltenes Werkstück von der anderen Werkstückspindel übernommen werden kann. Dabei können beide Werkstückspindeln bzw. ihre Spindelstöcke in Richtung der Z-Achse verschiebbar sein, ausreichend ist es jedoch, wenn dies nur für eine der beiden Werkstückspindeln gilt, vor allem dann, wenn der Werkzeugträger-Schlitten in Richtung der Z-Achse verschiebbar ist. Wie sich bereits aus dem Vorstehenden ergibt, kann bei einer solchen erfindungsgemäßen Drehmaschine mit Werkzeugen des Revolverkopfs ein von der einen Werkstückspindel gehaltenes Werkstück und mit einem Werkzeug der zweiten Aufnahme ein von der anderen Werkstückspindel gehaltenes Werkstück bearbeitet werden, ohne daß es dazu eines Verschwenkens des Werkzeugrevolvers bedarf.

Vor allem für erfindungsgemäß gestaltete Gegenspindelmaschinen wird vorgeschlagen, einen zweiten Werkzeugträger bezüglich der Z-Achse dem ersten Werkzeugträger gegenüberliegend anzuordnen, weil sich dadurch eine ganze Reihe von Vorteilen erreichen läßt: Ein erstes Werkstück kann von der ersten Werkstückspindel an die zweite Werkstückspindel übergeben und dort mit Hilfe des erfindungsgemäß ausgebildeten Werkzeugrevolvers bearbeitet werden, während gleichzeitig ein zweites, dann von der ersten Werkstückspindel gehaltenes Werkstück mit Hilfe des zweiten Werkzeugträgers bearbeitet wird; der Revolverkopf des Werkzeugrevolvers kann mit einer sogenannten Synchronspindel versehen sein, um das vordere Ende eines in der ersten Werkstückspindel gehaltenen und bereits bearbeiteten Werkstücks zu halten, während mit einem Werkzeug des zweiten Werkzeugträgers dieses Werkstück von einer Materialstange abgetrennt wird; schließlich kann mit einem von der zweiten Werkzeugaufnahme des Werkzeugrevolvers gehaltenen Werkzeug ein von der ersten Werkstückspindel gehaltenes Werkstück bearbeitet werden, während gleichzeitig mit einem Werkzeug des zweiten Werkzeugträgers am Außenumfang des Werkstücks Dreharbeiten durchgeführt werden. Aus dem Vorstehenden ergibt sich, daß ein zweiter Werkzeugträger auch dann Vorteile mit sich bringt, wenn eine erfindungsgemäße Drehmaschine nicht als Gegenspindelmaschine ausgebildet ist, d. h. nur über eine einzige Werkstückspindel verfügt. Bei dem zweiten Werkzeugträger-Schlitten könnte es sich nur um einen sogenannten Abstechschlitten handeln, d. h. um einen Schlitten, welcher nur in Richtung der X-Achse verschiebbar ist; vorteilhafter sind aber Ausführungsformen, bei denen der zweite Werkzeugträger auf einem zweiten Werkzeugträger-Schlitten angeordnet ist, welcher parallel zur Z-Achse sowie parallel zur X-Achse verschiebbar ist.

Ist eine erfindungsgemäße Drehmaschine als Gegenspindelmaschine ausgebildet und mit zwei Werkzeugträgern gemäß den vorstehenden Ausführungen versehen, so empfiehlt sich eine Ausführungsform, bei der die beiden Werkzeugträger-Schlitten an jede der beiden Werkstückspindeln heranfahrbar sind, d. h. - von vorn gesehen - in Richtung der Z-Achse aneinander vorbeifahren können, weil dann mit jedem der beiden Werkzeugträger an jeder der beiden Werkstückspindeln gearbeitet werden kann.

Vor allem bei als Gegenspindelmaschinen gestalteten erfindungsgemäßen Drehmaschinen ist es von Vorteil, wenn der Werkzeugrevolver um mindestens 180° um die Y-Achse schwenkbar ist, weil dann sowohl die Werkzeuge des Revolverkopfs, als auch ein von der zweiten Werkzeugaufnahme gehaltenes Werkzeug sowohl axial, als auch radial an jeder der beiden Werkstückspindeln einsetzbar sind.

Da bei einer erfindungsgemäßen Drehmaschine der Werkzeugrevolver um die Y-Achse schwenkbar ist, könnte die am Revolverkörper angeordnete zweite Werkzeugaufnahme schräg zur Revolverkopf-Schaltachse ausgerichtet sein, z. B. jeden beliebigen Winkel zwischen 0° und 90° mit der Schaltachse bilden. Sowohl im Sinne der Vermeidung eines Kollisionsrisikos, als auch zur Vereinfachung des Antriebs eines von der zweiten Werkzeugaufnahme gehaltenen Werkzeugs ist es jedoch von Vorteil, wenn die zweite Werkzeugaufnahme in Richtung der Schaltachse ausgerichtet ist, wobei die zweite Werkzeugaufnahme zur Schaltachse auch radial versetzt sein kann; in jedem Fall ist dann ein von der zweiten Werkzeugaufnahme gehaltenes Werkzeug, wie z.B. ein Bohrer, in Richtung der Schaltachse bzw. parallel hierzu ausgerichtet.

Die erfindungsgemäße Drehmaschine wird vorteilhafterweise so gestaltet, daß die zweite Werkzeugaufnahme auf der Schaltachse zentriert ist, da ihre Achse dann mit der Achse der Antriebswelle für das Revolverkopf-Werkzeug fluchtet und somit der Antrieb mittels eines gemeinsamen Antriebsmotors besonders einfach gestaltet werden kann.

Wenn bei einer erfindungsgemäßen Drehmaschine der Werkzeugträger-Schlitten in Richtung der X-, Z- und Y-Achse verschiebbar sein soll, wird zur Erzielung einer möglichst steifen Konstruktion empfohlen, die Drehmaschine so zu gestalten, daß der erste Werkzeugträger-Schlitten als an einem Kreuzschlittensystem in Richtung der Y-Achse verschiebbar geführte und um die Y-Achse drehbar gelagerte Pinole ausgebildet ist, obwohl natürlich der Werkzeugträger-Schlitten auch an einer normalen, sich in Richtung der Y-Achse erstreckenden Schlittenführung des Oberschlittens eines Kreuzschlittensystems verschiebbar geführt sein könnte.

Versieht man einen Revolverkopf mit einem langen Werkzeug, insbesondere einer langen Bohrstange, so kann dies bzw. diese zu einem Kollisionsrisiko führen, weil beim Weiterschalten des Revolverkopfs, d. h. beim Drehen des Revolverkopfs um seine Schaltachse, ein solches (wie bei Revolverwerkzeugen üblich) im Bereich des Umfangs des Revolverkopfs gehaltenes Werkzeug beim Weiterschalten des Revolverkopfs z. B. mit dem Spindelkasten kollidieren kann. Um hier Abhilfe zu schaffen, wird gemäß einer vorteilhaften Weiterbildung der Erfindung vorgeschlagen, zumindest ungefähr im Zentrum des Revolverkopfs bzw. eines im Zentrum des Revolverkopfs liegenden Bereichs des Revolverkörpers eine dritte Werkzeugaufnahme vorzusehen, welche insbesondere auf der Schaltachse zentriert ist, obwohl die Achse dieser dritten Werkzeugaufnahme mit der Schaltachse auch einen spitzen Winkel einschließen könnte, weil der Werkzeugrevolver ja um die Y-Achse schwenkbar ist. Für ein von einer solchen dritten Werkzeugaufnahme gehaltenes Werkzeug ist das vorstehend aufgezeigte Kollisionsrisiko weit kleiner oder gar nicht gegeben, weil beim Weiterschalten des Revolverkopfs ein von der dritten Werkzeugaufnahme gehaltenes Werkzeug, wie z. B. eine Bohrstange, keine Bewegung durchführt, wenn die dritte Werkzeugaufnahme auf der Schaltachse zentriert ist. Dieser dritten Werkzeugaufnahme könnte auch ein Antrieb für ein antreibbares Werkzeug zugeordnet sein, bevorzugt werden jedoch Ausführungsformen, bei denen die dritten Werkzeugaufnahme drehfest am Revolverkopf angeordnet, d. h. also für nicht-antreibbare Werkzeuge, wie z. B. eine Bohrstange, vorgesehen ist.

Die zweite Werkzeugaufnahme wird zweckmäßigerweise als Zapfstelle für ein am Revolverkörper fest anbringbares Zusatzaggregat mit antreibbarem Werkzeug ausgebildet; eine solche Ausführungsform darf nicht mit der Drehmaschine nach der DE-32 21 513-C verwechselt werden, denn bei dieser bekannten Drehmaschine ist das Zusatzaggregat am Revolverkörper schwenkbar angebracht, ganz abgesehen davon, daß bei dieser bekannten Drehmaschine die Zapfstelle für das Zusatzaggregat nicht an der vom Revolverkopf abgewandten Seite des Revolverkörpers angeordnet ist. Bei diesem Zusatzaggregat der erfindungsgemäßen Drehmaschine kann es sich insbesondere um eine Mehrkantdreh- oder Gewindefräs-Einrichtung handeln. Ist die erfindungsgemäße Drehmaschine als Gegenspindelmaschine ausgebildet, so empfiehlt es sich, die Konstruktion so zu gestalten, daß das Zusatzaggregat in zwei bezüglich der Achse der zweiten Werkzeugaufnahme um 180° versetzten Stellungen am Revolverkopf anbringbar ist, um so die Möglichkeit zu schaffen, daß mit dem Zusatzaggregat sowohl an der einen, als auch an der anderen Werkstückspindel gearbeitet werden kann.

Bei einer bevorzugten Ausführungsform ist der Antriebsmotor für den Antrieb eines von der zweiten Werkzeugaufnahme gehaltenen Werkzeugs und eines vom Revolverkopf gehaltenen Werkzeugs über mindestens eine schaltbare Kupplung mit dem Revolverkopf zum Drehen des letzteren um die Schaltachse und/oder zum Schwenken des Werkzeugrevolvers um die Y-Achse verbunden, um so mit einem einzigen Antriebsmotor sowohl den Werkzeugantrieb, als auch das Drehen bzw. Weiterschalten des Revolverkopfs um seine Schaltachse und/oder das Schwenken des Werkzeugrevolvers um die Y-Achse zu bewerkstelligen.

Grundsätzlich wäre es möglich, den Werkzeugrevolver durch seinen dem Verschwenken des Werkzeugrevolvers um die Y-Achse dienenden Antrieb an einem unerwünschten Verschwenken zu hindern, während mit einem vom Revolverkopf und/oder mit einem von der zweiten Werkzeugaufnahme gehaltenen Werkzeug gearbeitet wird; gerade im Hinblick auf die angestrebte hohe Präzision in der Werkstückbearbeitung empfehlen sich jedoch Ausführungsformen mit einer schaltbaren Blockiervorrichtung zur Verhinderung eines Verschwenkens des Werkzeugrevolvers um die Y-Achse, wobei eine solche Blockiervorrichtung ähnlich aufgebaut sein kann wie die bekannten Blockiervorrichtungen zum Verriegeln eines Revolverkopfs am Revolverkörper.

Der sowohl dem Antrieb eines vom Revolverkopf getragenen antreibbaren Werkzeugs, als auch dem Antrieb eines von der zweiten Werkzeugaufnahme gehaltenen Werkzeugs dienende Antriebsmotor könnte am Revolverkörper angebracht werden; dies ist jedoch häufig aus Platzgründen nicht zweckmäßig, vor allem dann, wenn der Antriebsmotor eine verhältnismäßig hohe Leistung haben soll, um ein von der zweiten Werkzeugaufnahme gehaltenes Werkzeug mit hoher Zerspanungsleistung anzutreiben. Deshalb steht bei einer bevorzugten Ausführungsform der erfindungsgemäßen Drehmaschine der Antriebsmotor mit einer in der Y-Achse liegenden Antriebswelle in Triebverbindung, durch die sowie über Getrieberäder die erste und die zweite Werkzeugaufnahme antreibbar sind. Dann kann der Antriebsmotor im Abstand vom Werkzeugrevolver am Werkzeugträger-Schlitten oder z. B. an denjenigen Schlitten angebaut sein, an bzw. in dem der den Werkzeugrevolver tragende Werkzeugträger-Schlitten verschiebbar geführt ist.

Aus Gründen der gewünschten hohen Zerspanungsleistung eines von der zweiten Werkzeugaufnahme gehaltenen Werkzeugs empfiehlt es sich, den Antriebsstrang zwischen Antriebsmotor und Werkzeugaufnahmen so zu gestalten, daß das Übersetzungsverhältnis zwischen zweiter und erster Werkzeugaufnahme mindestens 2 beträgt und vorzugsweise größer als 2 ist.

Da bei einer erfindungsgemäßen Drehmaschine der Werkzeugrevolver um die Y-Achse schwenkbar ist, kann er bei einer bevorzugten Ausführungsform der Drehmaschine mit einem Werkzeugmagazin zusammenarbeiten, um auf diese Weise einfach einen automatischen Werkzeugwechsel vornehmen zu können. Deshalb empfiehlt es sich, die zweite Werkzeugaufnahme und, sofern vorhanden, die dritte Werkzeugaufnahme jeweils mit einer Werkzeug-Spannvorrichtung zu versehen und ein vom ersten Werkzeugträger-Schlitten anfahrbares Werkzeugmagazin vorzusehen, so daß sich der Werkzeugrevolver seine Werkzeuge selbst vom Werkzeugmagazin abholen bzw. dort ablegen kann. Bei geeigneter Ausbildung des Werkzeugmagazins erübrigt sich dann sogar eine Werkzeuggreifeinrichtung zum Erfassen eines im Werkzeugmagazin abgelegten Werkzeugs sowie zum Einsetzen desselben in die betreffende Werkzeug-Spannvorrichtung bzw. für den umgekehrten Vorgang.

Grundsätzlich, und dies gilt für bevorzugte Ausführungsformen der erfindungsgemäßen Drehmaschine, ist es ausreichend, wenn der Werkzeugrevolver durch Verschwenken um die Y-Achse in mehrere bestimmte und fest vorgegebene Arbeitspositionen gebracht und dann, insbesondere durch eine schaltbare Blockiervorrichtung, an einem unbeabsichtigten Verschwenken um die Y-Achse gehindert werden kann. Es liegt aber auch im Rahmen der vorliegenden Erfindung, wenn der Werkzeugrevolver eine echte B-Achse aufweist, d. h. während eines Bearbeitungsvorgangs kontinuierlich und gesteuert um die Y-Achse geschwenkt werden kann.

Bei Drehmaschinen ist es bekannt, den Antrieb und die Steuerung der Werkstückspindel so zu gestalten, daß sich letztere kontinuierlich langsam und drehwinkelgesteuert drehen läßt, d. h. eine sogenannte C-Achse aufweist. Eine bevorzugte Ausführungsform der erfindungsgemäßen Drehmaschine besitzt nun nicht nur eine solche sogenannte C-Achse, sondern auch eine äquivalente Ausrüstung (sogenannte A-Achse) für die zweite Werkzeugaufnahme, d. h. diese Ausführungsform zeichnet sich durch Steuerungseinrichtungen zum kontinuierlichen und gesteuerten Drehantrieb der zweiten Werkzeugaufnahme in Abhängigkeit von einer kontinuierlichen und gesteuerten Drehung der Werkstückspindel aus. Eine solche Drehmaschine erlaubt es, durch Abwälzfräsen Zahnräder und dergleichen zu fertigen.

Weitere Merkmale und Vorteile der erfindungsgemäßen Drehmaschine ergeben sich aus der nachfolgenden Beschreibung sowie der beigefügten zeichnerischen Darstellung einiger besonders vorteilhafter Ausführungsformen, und in der Zeichnung zeigen:
Fig. 1 eine Frontansicht einer ersten bevorzugten Ausführungsform der erfindungsgemäßen Drehmaschine, welche als Gegenspindelmaschine ausgebildet ist, wobei jedoch der axiale Abstand (Abstand in Richtung der Z-Achse) zwischen den beiden Spindelkästen verkürzt wurde;
Fig. 2 einen Schnitt durch diese Drehmaschine nach der Linie 2-2 in Fig. 1;
Figuren 3 - 5 drei Beispiele für den Einsatz des Werkzeugrevolvers der Drehmaschine nach den Figuren 1 und 2;
Fig. 6 einen Schnitt durch den Werkzeugrevolver nach der Linie 6-6 in Fig. 1, wobei jedoch eine abgewandelte Version mit einer zentralen dritten Werkzeugaufnahme am Revolverkopf dargestellt wurde;
Fig. 7 eine Draufsicht auf den in Fig. 6 dargestellten Werkzeugrevolver, gesehen in Richtung des Pfeils "E" in Fig. 6, wobei die dritte Werkzeugaufnahme mit einem stangenförmigen Drehwerkzeug zum Drehen eines Innendurchmessers eines Werkstücks bestückt wurde;
Fig. 8 einen Teil einer Frontansicht einer dritten Ausführungsform der erfindungsgemäßen Drehmaschine, welche erfindungsgemäß mit zwei Werkzeugmagazinen zum Bestücken der zweiten bzw. dritten Werkzeugaufnahme des Werkzeugrevolvers aus- gestattet ist;
Fig. 9 eine teilweise als Schnittbild gestaltete Darstellung eines Teils des den Werkzeugrevolver tragenden Schlittensystems der Drehmaschine nach den Figuren 1 und 2;
Fig. 10 einen Schnitt durch den als Pinole gestalteten, den Werkzeugrevolver tragenden Werkzeugträger-Schlittens nach der Linie 10-10 in Fig. 9;
Fig. 11 einen Teilschnitt durch eine vierte Ausführungsform des Werkzeugrevolvers mit angebautem Zusatzaggregat, welches als Mehrkant-Dreheinrichtung ausgebildet ist, und
Fig. 11A einen Schnitt nach der Linie 11A-11A in Fig. 11.

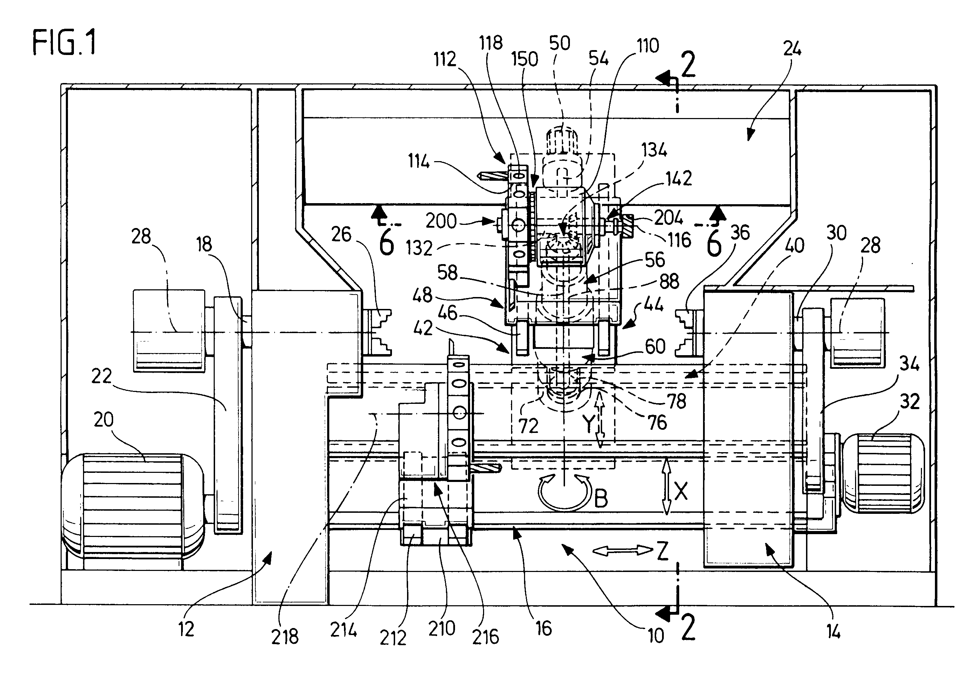

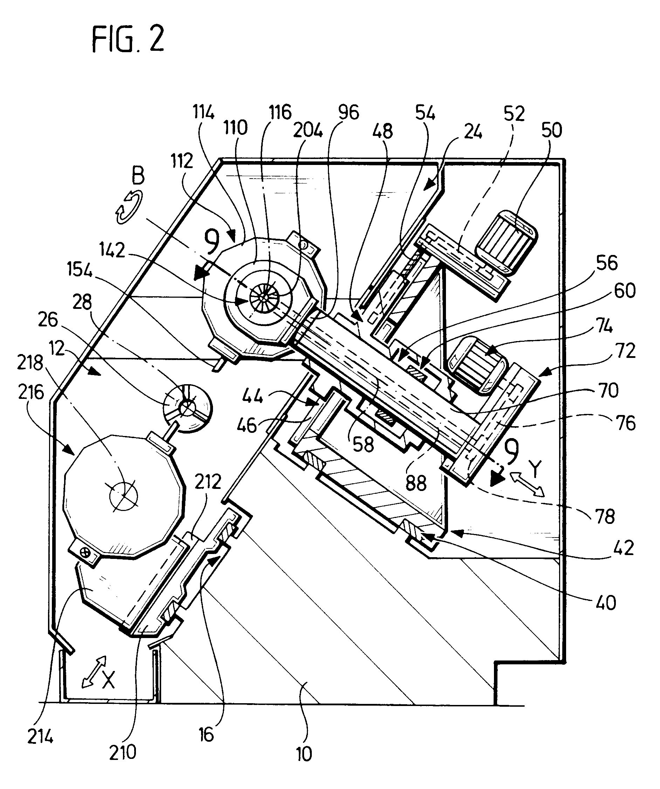

Bei der in den Figuren 1 und 2 dargestellten Drehmaschine handelt es sich um eine sogenannte Schrägbett-Maschine mit einem Maschinenbett 10, an dem ein erster Spindelkasten 12 fest und ein zweiter Spindelkasten 14 in Richtung der Z-Achse verschiebbar angeordnet ist; hierzu ist das Maschinenbett 10 mit einer Z-Führung 16 versehen. Im Spindelkasten 12 ist eine erste Werkstückspindel 18 drehbar gelagert, welche von einem stationären Motor 20 z. B. über einen Zahnriemen 22 angetrieben wird und an ihrem einem Arbeitsraum 24 der Drehmaschine zugekehrten Ende mit einer als Spannfutter ausgebildeten Werkstück-Spannvorrichtung 26 versehen ist. Die Achse 28, um die die Werkstückspindel 18 gedreht werden kann, stellt die Drehachse der Drehmaschine dar und definiert somit die Z-Achse.

Im zweiten Spindelkasten 14 ist eine zweite Werkstückspindel 30 drehbar gelagert, wobei die Achse dieser zweiten Werkstückspindel mit der Drehachse 28 zusammenfällt. Am Spindelkasten 14 ist ein Motor 32 angebracht, welcher die zweite Werkstückspindel 30 z. B. über einen Zahnriemen 34 antreibt. Mittel zur Verschiebung des zweiten Spindelkastens 14 in Richtung der Z-Achse wurden der Einfachheit halber nicht dargestellt. An ihrem dem Arbeitsraum 24 zugewandten Ende trägt auch die zweite Werkstückspindel 30 eine Werkstück-Spannvorrichtung 36, so daß sich ein zuerst von der ersten Werkstückspindel 18 gehaltenes und dabei bearbeitetes Werkstück dadurch in die zweite Werkstückspindel 30 übernehmen läßt, daß der Spindelkasten 14 gemäß Fig. 1 nach links gefahren, das Werkstück in der Werkstück-Spannvorrichtung 36 gespannt und die Spannvorrichtung 26 geöffnet wird, worauf man den Spindelkasten 14 gemäß Fig. 1 wieder nach rechts verfährt. Z. B. die erste Werkstückspindel 18 kann als Hohlspindel ausgebildet sein, um in der Drehmaschine Stangenmaterial bearbeiten zu können, welches gemäß Fig. 1 von links zugeführt wird.

Wie am besten die Fig. 2 erkennen läßt, ist am Maschinenbett 10 eine zweite Z-Führung 40 angeordnet, an der ein Unterschlitten 42 eines als Ganzes mit 44 bezeichneten Kreuzschlittensystems in Richtung der Z-Achse verschiebbar geführt ist. Antriebsmittel zum Verschieben des Unterschlittens 42 längs der Z-Führung 40 wurden nicht dargestellt. Der Unterschlitten 42 trägt Führungsleisten 46, die sich in Richtung der quer zur Z-Achse verlaufenden X-Achse erstrecken und der Führung eines Oberschlittens 48 des Kreuzschlittensystems 44 dienen. Der Verschiebung des Oberschlittens 48 dient ein vom Unterschlitten 42 getragener Motor 50, welcher über einen Zahnriemen 52 eine am Unterschlitten 42 drehbar, jedoch unverschiebbar gelagerte Gewindespindel 54 antreibt; letztere läuft in einer nicht dargestellten und am Oberschlitten 48 befestigten Mutter, so daß eine Drehung der Gewindespindel 54 eine Verschiebung des Oberschlittens 48 in Richtung der X-Achse zur Folge hat.

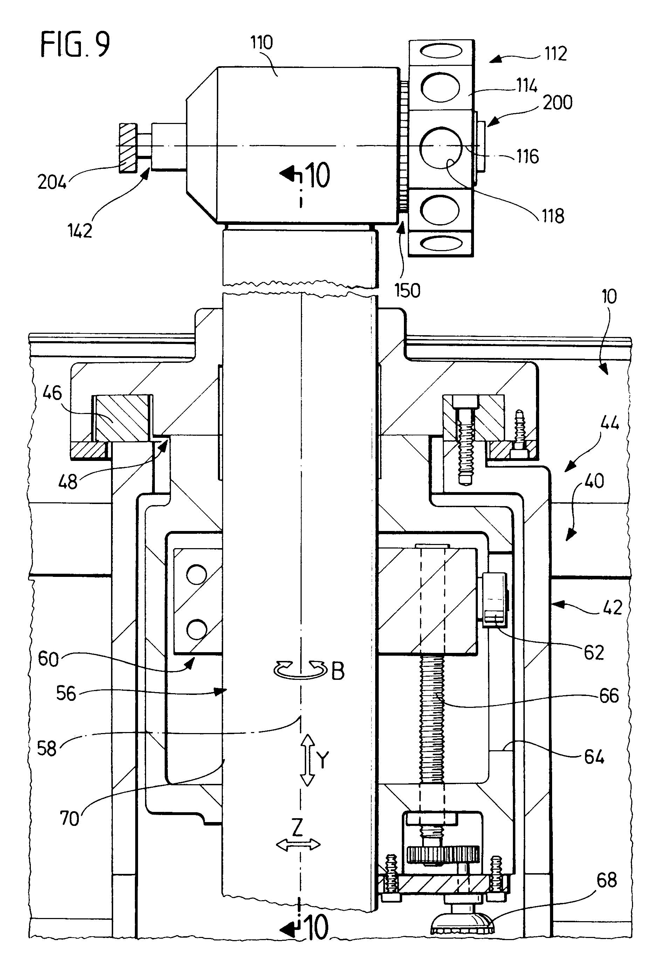

Im Oberschlitten 48 ist ein als Pinole ausgebildeter Werkzeugträger-Schlitten 56 derart gelagert, daß er sich in Richtung einer mit 58 bezeichneten Achse, welche quer zur Z-sowie zur X-Achse verläuft und infolgedessen eine Y-Achse definiert, verschieben läßt. Antriebsmittel, mit denen diese Verschiebung bewirkt wird, sind in Fig. 9 dargestellt, so daß für das Folgende auf diese Figur verwiesen wird. Am Werkzeugträger-Schlitten 56 ist ein Joch 60 befestigt, welches sich mit mindestens einer Rolle 62 in mindestens einem Längsschlitz 64, der sich in Richtung der Y-Achse 58 erstreckt, des Oberschlittens 48 abstützt und eine nicht dargestellte Mutter für eine im Oberschlitten 48 drehbar, jedoch unverschiebbar gelagerte Gewindespindel 66 bildet, welche mittels eines am Oberschlitten 48 befestigten Motors 68 angetrieben wird; eine Drehung der Gewindespindel 66 bewirkt also eine Längsverschiebung des Werkzeugträger-Schlittens 56 in Richtung der Y-Achse.

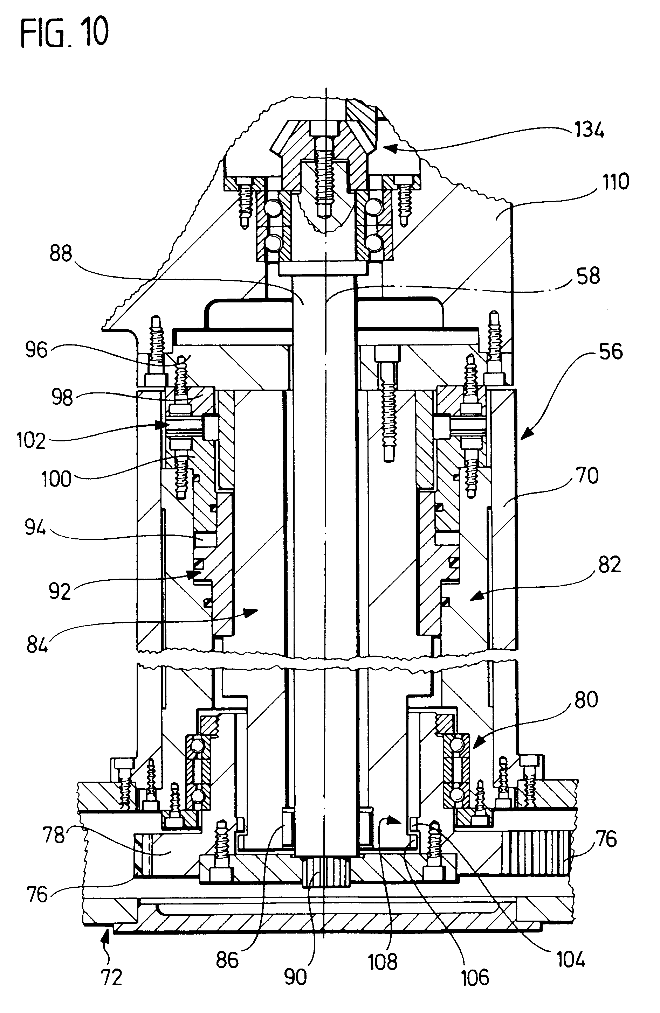

Anhand der Figuren 2 und 10 soll nun näher erläutert werden, welche Elemente an und im Inneren des als Pinole ausgebildeten Werkzeugträger-Schlittens 56 vorgesehen sind. Der eigentliche Werkzeugträger-Schlitten besteht aus einem zylindrischen Hohlkörper 70, an dessen unterem Ende eine hohle Konsole 72 befestigt ist. An dieser ist wiederum ein Antriebsmotor 74 befestigt, welcher über einen im Inneren der Konsole 72 verlaufenden Zahnriemen 76 ein Antriebsrad 78 antreibt. Letzteres ist konzentrisch zur Y-Achse 58 angeordnet und mit einem Lager 80 in einer am Hohlkörper 70 befestigten Büchse 82 drehbar, jedoch axial unverschiebbar gelagert. Ferner ist im Hohlkörper 70 ein hohler Schaft 84 eines noch zu erörternden Werkzeugrevolvers konzentrisch zur Y-Achse 58 drehbar und längs dieser verschiebbar gelagert, und dieser Schaft dient zusammen mit einem Lager 86 der Lagerung des einen Endes einer Antriebswelle 88, die mit dem Antriebsrad 78 mittels einer Keilverzahnung 90 drehfest verbunden ist, wobei sich die Antriebswelle 88 jedoch axial gegenüber dem Antriebsrad 78 verschieben läßt. Der Revolverschaft 84 wird von einem Ringkolben 92 umfaßt, der am Revolverschaft 84 gegen eine Längsverschiebung gesichert gehalten ist und in einen kreisringförmigen, von der Büchse 82 gebildeten Zylinderraum 94 hineinragt, so daß zusammen mit nicht dargestellten Druckmittelanschlüssen die Büchse 82 und der Ringkolben 92 einen doppelt wirkenden Druckmittelzylinder bilden, mit dessen Hilfe sich der Revolverschaft 84 aus einer in Fig. 10 dargestellten verriegelten Stellung gemäß Fig. 10 nach oben in eine unverriegelte Stellung verschieben sowie durch Absenken wieder verriegeln läßt. An dem gemäß Fig. 10 oberen Ende des Revolverschafts 84 ist eine von der Antriebswelle 88 durchsetzte Platte 96 befestigt, an der wiederum ein erster Zahnring 98 befestigt ist. Ein zweiter Zahnring 100 ist Bestandteil der Büchse 82 bzw. an dieser befestigt, und die beiden Zahnringe 98 und 100 bilden eine sogenannte HIRTH-Verzahnung 102, die in dem in Fig. 10 dargestellten Zustand ineinandergreift, so daß sich der Zahnring 98 und damit die Platte 96 und der Revolverschaft 84 nicht verdrehen lassen. Wird hingegen mit Hilfe des Ringkolbens 92 der Zahnring 98 gemäß Fig. 10 nach oben vom Zahnring 100 abgehoben, ist der Revolverschaft 84 entriegelt, d. h. er kann um die Y-Achse 58 gedreht werden; gleichzeitig greifen die beiden Zahnkränze 104 und 106 einer Kupplung 108, welche einerseits am Antriebsrad 78 und andererseits am Revolverschaft 84 vorgesehen sind, ineinander, so daß sich der Revolverschaft 84 durch Drehen des Antriebsrads 78 um die Y-Achse 58 drehen läßt. Da zusammen mit dem Revolverschaft 84 auch die Antriebswelle 88 in Richtung der Y-Achse 58 verschoben wird, könnte die Konstruktion in Abwandlung der in Fig. 10 dargestellten Ausführungsform so ausgebildet werden, daß bei entriegeltem Revolverschaft 84 und sich in Eingriff befindlicher Kupplung 108 die Antriebswelle 88 nicht mehr mit dem Antriebsrad 78 gekuppelt ist, z. B. deshalb, weil die Keilverzahnung 90 der Antriebswelle 88 nicht mehr in das Antriebsrad 78 eingreift.

Wie sich aus Fig. 10 in Verbindung mit Fig. 2 ergibt, ist auf der mit dem Revolverschaft 84 fest verbundenen Platte 96 der Revolverkörper 110 eines als Ganzes mit 112 bezeichneten Werkzeugrevolvers befestigt, so daß bei einer Drehung des Revolverschafts 84 um die Y-Achse 58 der Werkzeugrevolver 112 um die Y-Achse geschwenkt wird.

Wie z. B. die Fig. 1 verdeutlicht, ist am Revolverkörper 110 ein Revolverkopf 114 um eine quer zur Y-Achse 58 verlaufende Schaltachse 116 drehbar gelagert angebracht. Wie bekannt, besitzt der Revolverkopf 114 in jeder seiner Stationen Werkzeugaufnahmen für eine Bestückung mit bezüglich zur Schaltachse 116 radial bzw. axial ausgerichteten Werkzeugen, wobei es sich beispielsweise bei der in Fig. 1 mit 118 bezeichneten ersten Werkzeugaufnahme um eine mit einem antreibbaren Werkzeug bestückbare Werkzeugaufnahme handeln soll.

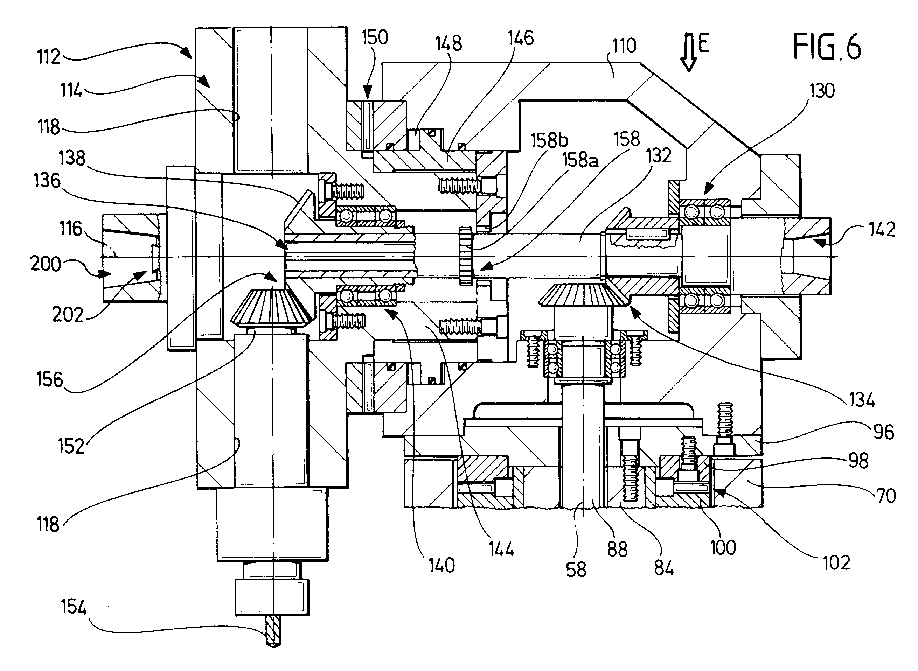

Anhand der Fig. 6 soll nun der innere Aufbau des Werkzeugrevolvers soweit beschrieben werden, wie dies für das Verständnis der vorliegenden Erfindung erforderlich ist. In diesem Zusammenhang sei aber darauf hingewiesen, daß es bereits seit längerem Stand der Technik ist, von einem Antriebsstrang für den Antrieb von in einem Revolverkopf gehaltenen Werkzeugen den Schaltantrieb für den Revolverkopf, d. h. den Antrieb zum Drehen des Revolverkopfs um seine Schaltachse abzuleiten, so daß weder der Antrieb eines in einer ersten Werkzeugaufnahme 118 gehaltenen Werkzeugs, noch der Schaltantrieb zum Drehen des Revolverkopfs 114 um die Schaltachse 116 im Detail erläutert werden müssen.

Im Revolverkörper 110 ist ein Lagerkörper 130 befestigt, welches der Lagerung einer zentralen Zwischenwelle 132 dient; diese ist bei der bevorzugten Ausführungsform koaxial zur Schaltachse 116 und axial unverschiebbar gelagert und wird über ein Winkelgetriebe 134 von der Antriebswelle 88 angetrieben. Auf der Zwischenwelle 132 ist mittels einer Keilverzahnung 136 ein Kegelrad 138 in axialer Richtung verschiebbar, jedoch gegenüber der Zwischenwelle unverdrehbar gehalten, welches an einem auch im Revolverkopf 114 befestigten Lager 140 befestigt ist, so daß sich das Kegelrad 138 zwar im Revolverkopf 114 drehen, diesem gegenüber jedoch nicht axial verschieben läßt.

An der vom Revolverkopf 114 abgewandten Seite des Revolverkörpers 110 ist letzterer mit einer zweiten Werkzeugaufnahme 142 versehen, welche im Revolverkörper 110 um die Schaltachse 116 drehbar gelagert ist und in der sich mit Hilfe nicht dargestellter, jedoch üblicher Mittel z.B. ein Bohrer oder ein Fräswerkzeug festspannen läßt.

An einem Schaft 144 des Revolverkopfs 114 ist ein diesen Schaft umfassender Ringkolben 146 unverschiebbar angeordnet, für den der Revolverkörper 110 einen ringförmigen Zylinderraum 148 bildet; dank entsprechender, jedoch nicht dargestellter Druckmittelanschlüsse bilden der Ringkolben 146 und der Zylinderraum 148 einen doppelwirkenden Druckmittelzylinder, mit dessen Hilfe sich der gegenüber dem Revolverkörper 110 um die Schaltachse 116 drehbar und in Richtung der Schaltachse verschiebbare Revolverkopf 114 in Richtung der Schaltachse 116 aus der in Fig. 6 dargestellten verriegelten (gegen Drehen gesicherten Stellung gemaß Fig. 6 nach links in eine Schaltposition vorschieben läßt, in der der Revolverkopf 114 um die Schaltachse 116 drehbar ist; außerdem läßt sich der Revolverkopf wieder in seine verriegelte Position zurückziehen, in der sich eine HIRTH-Verzahnung 150 im Eingriff befindet. Letztere wird von einem mit dem Revolverkörper 110 fest verbundenen ersten Zahnring sowie einem mit dem Revolverkopf 114 fest verbundenen zweiten Zahnring gebildet, welche in der in Fig. 6 dargestellten Position ineinandergreifen und so ein Verdrehen des Revolverkopfs 114 gegenüber dem Revolverkörper 110 verhindern.

Die Fig. 6 zeigt ferner eine Werkzeugspindel 152, welche der ersten Werkzeugaufnahme 118 (siehe Fig. 1) zugeordnet sein soll und in Fig. 6 mit einem Werkzeug 154 gekuppelt ist, mit dem die erste Werkzeugaufnahme 118 bestückt wurde. Die Werkzeugspindel 152 wird vermittels eines Winkelgetriebes 156 von der Zwischenwelle 132 und damit von der Antriebswelle 88 angetrieben.

Soll der Revolverkopf 114 um seine Schaltachse 116 gedreht werden, um z. B. eine andere seiner Stationen in eine Arbeitsposition zu bringen, wird der Revolverkopf 114 mit Hilfe des Ringkolbens 146 aus der in Fig. 6 gezeigten Position gemäß Fig. 6 nach links verschoben und auf diese Weise entriegelt. Dabei wird eine Kupplung 158 eingerückt, welche aus einer angetriebenen ersten Kupplungshälfte 158a, die auf der Zwischenwelle 132 befestigt ist, und einer zweiten Kupplungshälfte 158b besteht, die am Revolverschaft 144 befestigt ist, und infolgedessen dieselben Axialbewegungen durchführt wie der Revolverkopf 114. Bei eingerückter Kupplung 158 hat also eine Drehung der Antriebswelle 88 eine Drehung des Revolverkopfs 114 um die Schaltachse 116 zur Folge.

Erfindungsgemäß ist das Winkelgetriebe 156 so dimensioniert, daß sich zwischen der Zwischenwelle 132 und damit der zweiten Werkzeugaufnahme 142 und der Werkzeugspindel 152 eine Übersetzung i von ca. 4:1 ergibt.

Erfindungsgemäß ist der Werkzeugrevolver mit einer dritten Werkzeugaufnahme 200 versehen, die der zweiten Werkzeugaufnahme 142 gegenüberliegt und insbesondere zur Schaltachse 116 zentriert ist. Bei der dargestellten Ausführungsform befindet sich die dritte Werkzeugaufnahme am Revolverkopf 114; es ist aber ohne weiteres verständlich, daß der Werkzeugrevolver auch so ausgebildet werden könnte, daß die dritte Werkzeugaufnahme an einem zum Revolverkörper 110 gehörenden Bereich angeordnet ist, der vom Revolverkopf 114 ringförmig umgeben wird. Ein Spannzylinder zum Festspannen eines Werkzeugs in der dritten Werkzeugaufnahme 200 wurde der Einfachheit halber nicht dargestellt.

Bei der gezeichneten bevorzugten Ausführungsform ist die dritte Werkzeugaufnahme 200 für ein nicht-antreibbares Werkzeug vorgesehen. Es liegt aber auf der Hand, daß insbesondere dann, wenn die dritte Werkzeugaufnahme 200 auf der Schaltachse 116 zentriert ist, sie auch für die Aufnahme eines antreibbaren Werkzeugs ausgebildet werden könnte, da dann lediglich eine Verlängerung der zentralen Zwischenwelle 132 erforderlich wäre.

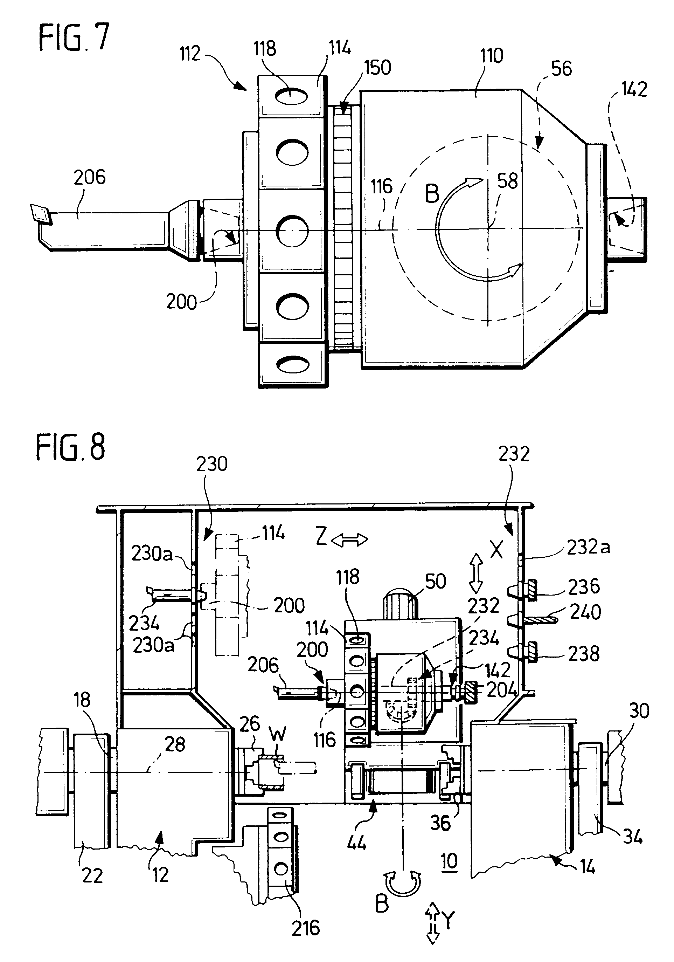

Die Figuren 1 bis 4 und 8 lassen einen in die zweite Werkzeugaufnahme 142 eingesetzten Fräser 204 erkennen, während die Fig. 7 eine in die dritte Werkzeugaufnahme 200 eingesetzte Bohrstange 206 darstellt.

Wie die Figuren 1 und 2 zeigen, ist auf der Z-Führung 16 ein Unterschlitten 210 verschiebbar geführt, welcher sich in Richtung der X-Achse erstreckende Führungen 212 besitzt, an denen ein Oberschlitten 214 geführt ist. Antriebe zum Verschieben des Unter- und des Oberschlittens 210 bzw. 214 wurden, da hinlänglich bekannt, nicht dargestellt. Der Oberschlitten 214 trägt einen üblichen Werkzeugrevolver 216, dessen Schaltachse 218 parallel zur Drehachse 28 verläuft und der auch mit antreibbaren Werkzeugen bestückt sein kann, um z. B. an einem von der zweiten Werkstück-Spannvorrichtung 36 gehaltenen Werkstück zu arbeiten. Ebenso wie aber mit Werkzeugen des Werkzeugrevolvers 216 Werkstücke an beiden Werkstückspindeln 18, 30 bearbeitbar sein sollen, soll auch mit Werkzeugen des Werkzeugrevolvers 112 an beiden Werkstückspindeln gearbeitet werden können, weshalb die Z-Führung 40 so lang bemessen wurde, daß sich auch der Werkzeugrevolver 112 in den Bereich der zweiten Werkstück-Spannvorrichtung 36 fahren läßt.

Anhand der Figuren 1 - 5 sollen nun einige Bearbeitungsmöglichkeiten erläutert werden, welche die erfindungsgemäße Drehmaschine erlaubt.

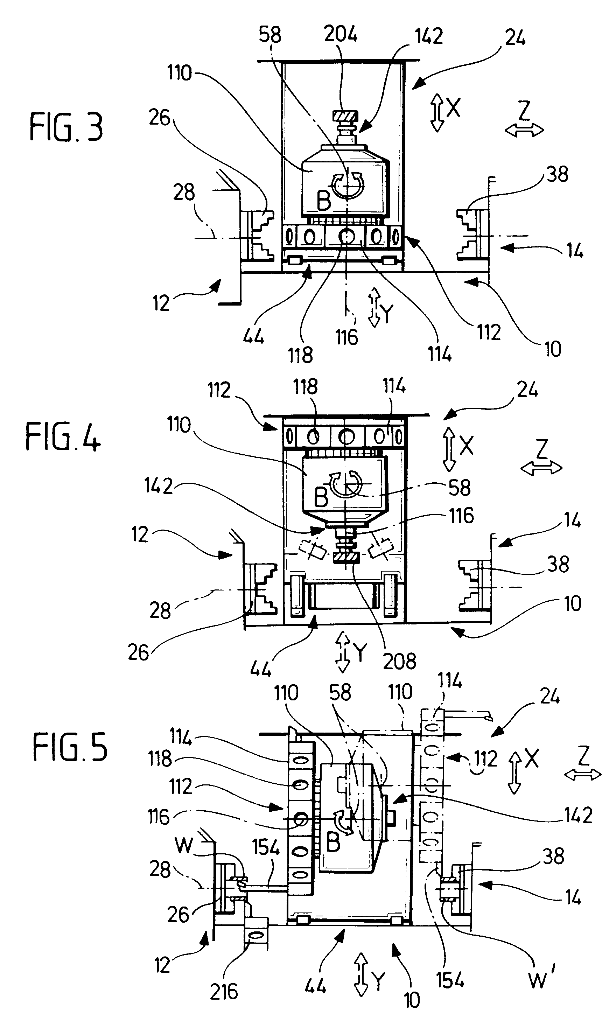

Wie man aus Fig. 1 erkennt, kann ein von der ersten Werkstück-Spannvorrichtung 26 gehaltenes Werkstück gleichzeitig mit Werkzeugen beider Werkzeugrevolver 112 und 216 bearbeitet werden. Die Fig. 3 zeigt eine Situation, in der mit Werkzeugen des ersten Werkzeugrevolvers 112 ein von der ersten Werkstückspindel 18 gehaltenes Werkstück oder ein von der zweiten Werkstückspindel 30 gehaltenes Werkstück oder beide Werkstücke gleichzeitig bearbeitet werden können; so wäre es z. B. möglich, Innendreharbeiten an beiden Werkstücken gleichzeitig durchzuführen, da ja der zweite Spindelkasten 14 in Richtung der Z-Achse verfahrbar ist. Die Fig. 4 zeigt den Einsatz des Fräsers 204, wobei strichpunktiert angedeutet wurde, daß dabei die Fräserachse nicht senkrecht zur Drehachse 28 verlaufen muß. In Fig. 5 wurden zwei mögliche Positionen des ersten Werkzeugrevolvers 112 mit ausgezogenen bzw. strichpunktierten Linien dargestellt; in der einen Position des Werkzeugrevolvers 112 wird mit einer von diesem gehaltenen Bohrstange ein von der Werkstück-Spannvorrichtung 26 gehaltenes Werkstück W einem Innenbearbeitungsvorgang unterworfen, während mit einem vom zweiten Werkzeugrevolver 216 getragenen Drehwerkzeug gleichzeitig eine Außendrehbearbeitung des Werkstücks W durchgeführt wird. Nach einem Schwenken des Werkzeugrevolvers 112 um 180° um die Y-Achse 58 können die vom Revolverkopf 114 getragenen Werkzeuge an einem Werkstück W' zum Einsatz gebracht werden, welches von der zweiten Werkstück-Spannvorrichtung 36 gehalten wird. Aus den Figuren 1 und 2 ergibt sich im übrigen, daß der Fräser 204 ohne weiteres mit zur Drehachse 28 paralleler Achse an einem von der zweiten Werkstück-Spannvorrichtung 36 gehaltenen Werkstück derart zum Einsatz gebracht werden kann, daß sich z. B. durch Abwälzfräsen Zahnräder herstellen lassen; hierfür ist es nur erforderlich, den Fräser 204 und die zweite Werkstückspindel 30 koordiniert gesteuert um die Achse 116 der zweiten Werkzeugaufnahme 136 (A-Achse) bzw. um die Drehachse 28 zu drehen (in diesem Fall ist also mindestens die zweite Werkstückspindel 30 mit einer sogenannten C-Achse, d.h. einer rotatorischen Vorschubachse versehen). Es wurde bereits erwähnt, daß es bei CNC-Drehmaschinen bekannt ist, eine Werkstückspindel um ihre Achse drehwinkelgesteuert und verhältnismäßig langsam zu drehen, um so eine als Rotationsvorschubachse dienende C-Achse zu erhalten. Wenn man dieselben Antriebs- und Steuerungsmittel für den Antriebsmotor 74 und die Zwischenwelle 132 vorsieht, erhält man für die zweite Werkzeugaufnahme 142 gleichfalls eine solche Rotationsvorschubachse (A-Achse), so daß durch eine Koordination der beiden rotatorischen Vorschubachsen bzw. durch entsprechende Interpolation in der Maschinensteuerung die Möglichkeit geschaffen wird, z. B. Zahnräder durch Abwälzfräsen herzustellen.

Die Fig. 8 zeigt eine Variante der Drehmaschine nach den Figuren 1 und 2, wobei diese Variante mit einem ersten und einem zweiten Werkzeugmagazin 230 bzw. 232 versehen ist, die beide so ausgebildet und angeordnet sind, daß sich in diesen Werkzeugmagazinen abgespeicherte Werkzeuge mit dem Werkzeugrevolver 112 abholen und in den Werkzeugmagazinen wieder abspeichern lassen. Werkzeugmagazine, welche in ihnen abgelegte Werkzeuge so halten, daß sie sich von einem mit einer Werkzeugaufnahme versehenen Werkzeugträger dem Magazin entnehmen, in dieses aber auch wieder einsetzen lassen, sind an sich bekannt, so daß es nicht erforderlich ist, die Werkzeugmagazine 230 und 232 detailliert zu beschreiben. Jedes dieser beiden Werkzeugmagazine hat mehrere Werkzeugaufnahmen 230a bzw. 232a, welche in dem in Fig. 8 dargestellten Zustand eine Bohrstange 234, Fräser 236 und 238 sowie einen Bohrer 240 halten. Diese Werkzeuge lassen sich durch entsprechendes Verfahren bzw. gegebenenfalls Verschwenken des Werkzeugrevolvers 112 aus den Werkzeugmagazinen abholen und dort wieder ablegen, wenn die zweite Werkzeugaufnahme 142 sowie die dritte Werkzeugaufnahme 200 jeweils mit einer Werkzeug-Spannvorrichtung versehen sind. Geeignete Werkzeug-Spannvorrichtungen sind in vielfältigster Ausführung bekannt, so daß es nicht erforderlich ist, hierauf näher einzugehen.

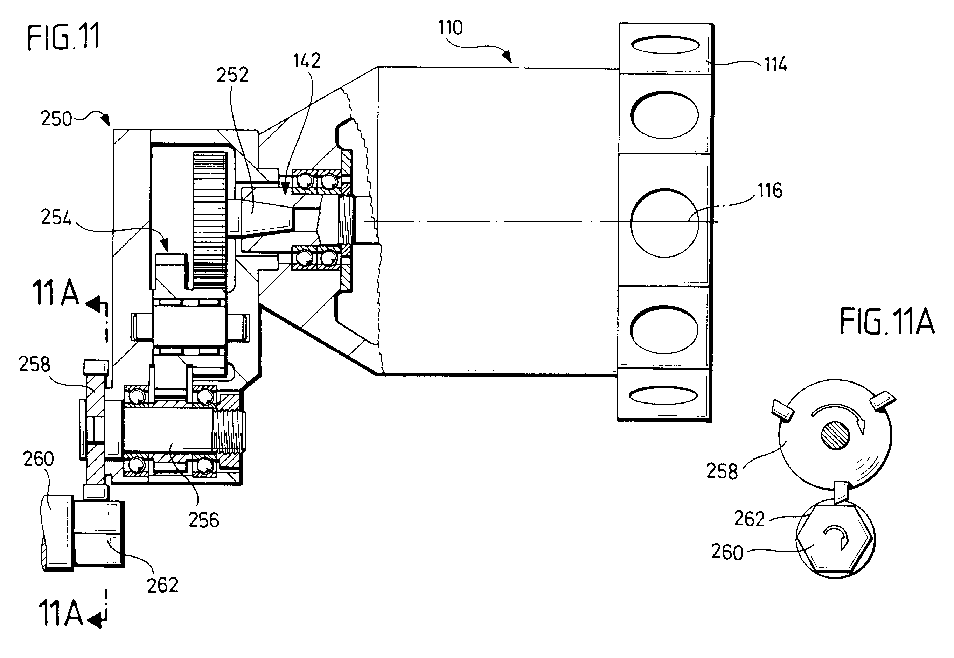

Schließlich soll anhand der Figuren 11 und 11A noch erläutert werden, daß die zweite Werkzeugaufnahme des erfindungsgemäß gestalteten Werkzeugrevolvers als Zapfstelle für ein Zusatzaggregat mit antreibbarem Werkzeug ausgebildet und verwendet werden kann. Die Fig. 11 zeigt ein solches Zusatzaggregat 250, welches am Revolverkörper 110 durch nicht näher dargestellte Mittel auswechselbar derart befestigt werden kann, daß es sich z. B. in zwei, bezüglich der Schaltachse 116 um 180° gegeneinander versetzten Stellungen am Revolverkörper 110 fest anbringen läßt. In Fig. 11 wurde ein als Mehrkant-Dreheinrichtung ausgebildetes Zusatzaggregat dargestellt. Dieses hat eine von der zweiten Werkzeugaufnahme 142 antreibbare Zapfwelle 252, welche über ein Zahnradgetriebe 254 eine Werkzeugwelle 256 antreibt. Diese trägt einen Messerkopf 258, der in bekannter Weise ausgebildet ist und mit dem sich an einem Werkstück 260 in bekannter Weise mehrere Flächen 262 erzeugen lassen, die bei der dargestellten Ausführungsform einen Sechskant-Querschnitt bilden (siehe Fig. 11A). Stellt man sich die in Fig. 11 gezeichnete Kombination aus Werkzeugrevolver 112 und Zusatzaggregat 250 in Fig. 1 vor, so ließe sich mit dem Zusatzaggregat 250 ein von der Werkstück-Spannvorrichtung 26 gehaltenes Werkstück bearbeiten. Stellt man sich nun anhand der Fig. 11 vor, daß das Zusatzaggregat 250 nach Lösen seiner Befestigungsmittel um 180° um die Schaltachse 116 geschwenkt und dann wieder am Revolverkörper 110 befestigt würde, so ließe sich das Zusatzaggregat 250 nach einem Schwenken des Werkzeugrevolvers 112 um 180° um die Y-Achse 58 an einem von der zweiten Werkstück-Spannvorrichtung 36 gehaltenen Werkstück zum Einsatz bringen.

Aus den vorstehenden Erläuterungen ergibt sich, daß die erfindungsgemäße Drehmaschine ohne Kollisionsprobleme ein 5-achsiges (X-, Y-, Z-, C- und B-Achse) Fräsen ermöglicht und daß bei Ausstattung dieser Drehmaschine mit einer sogenannten A-Achse und einer Wälzkoppelung in der Steuerung der CNC-Maschine (Interpolation der Drehbewegungen um die Werkstückachse und um die Werkzeugachse) darüber hinaus z. B. Zahnräder durch Abwälzfräsen hergestellt werden können.

## Patentansprüche

1. Drehmaschine mit einer eine Z-Achse definierenden Werkstückspindel (18) sowie einem Werkzeugträger-Schlitten (56), welcher einen Werkzeugträger in Gestalt eines einen Revolverkörper (110) und einen Revolverkopf (114) aufweisenden Werkzeugrevolvers (112) trägt und in Richtung einer ersten, quer zur Z-Achse verlaufenden Achse (X-Achse) verschiebbar ist, wobei Werkstückspindel (18) und Werkzeugträger-Schlitten (56) in Richtung der Z-Achse relativ zueinander verschiebbar sind, der Werkzeugrevolver (112) um eine zweite, gleichfalls quer zur Z-Achse sowie quer zur X-Achse verlaufende Achse (Y-Achse) schwenkbar und der Revolverkopf (114) um eine quer zur Y-Achse verlaufende Schaltachse (116) drehbar am Revolverkörper (110) angebracht ist, und mit ersten Werkzeugaufnahmen (118) am Revolverkopf (114) sowie einer vom Revolverkörper (110) getragenen zweiten Werkzeugaufnahme (142), welche mit einem Antrieb (74, 88, 132) für ein antreibbares Werkzeug (204) versehen ist, **dadurch gekennzeichnet**, daß die zweite Werkzeugaufnahme (142) unmittelbar am Revolverkörper (110) an dessen vom Revolverkopf (114) abgewandten Seite angeordnet ist, daß der Revolverkopf (114) mindestens eine mit einem Antrieb (74, 88, 132, 156, 152) für ein antreibbares Werkzeug (154) versehene erste Werkzeugaufnahme (118) aufweist und daß für alle antreibbaren Werkzeuge (154, 204) ein gemeinsamer Antriebsmotor (74) vorgesehen ist.

2. Drehmaschine nach Anspruch 1, dadurch gekennzeichnet, daß die zweite Werkzeugaufnahme (142) am Revolverkörper (110) derart angeordnet ist, daß ein von dieser zweiten Werkzeugaufnahme (142) gehaltenes Werkzeug (204) vom Revolverkopf (114) wegweist.

3. Drehmaschine nach Anspruch 1 oder 2, dadurch gekennzeichnet, daß Werkstückspindel (18) und Werkzeugrevolver (112) in Richtung der bzw. parallel zur Y-Achse (58) relativ zueinander verschiebbar sind.

4. Drehmaschine nach einem oder mehreren der Ansprüche 1 bis 3, dadurch gekennzeichnet, daß der Werkzeugrevolver (112) um mindestens 90° um die Y-Achse (58) schwenkbar ist.

5. Drehmaschine nach einem oder mehreren der Ansprüche 1 bis 4, dadurch gekennzeichnet, daß der Antrieb (132) für die zweite Werkzeugaufnahme (142) ein höheres Drehmoment aufweist als der Antrieb (152) für die erste Werkzeugaufnahme (118).

6. Drehmaschine nach einem oder mehreren der vorstehenden Ansprüche, dadurch gekennzeichnet, daß der Werkzeugträger-Schlitten (56) parallel zur Z-Achse (28) verschiebbar ist.

7. Drehmaschine nach einem oder mehreren der Ansprüche 1 bis 6, dadurch gekennzeichnet, daß der Werkzeugträger-Schlitten (56) in Richtung der Y-Achse (58) verschiebbar ist.

8. Drehmaschine nach einem oder mehreren der vorstehenden Ansprüche, dadurch gekennzeichnet, daß in Richtung der Z-Achse (28) der ersten Werkstückspindel (18) eine zweite Werkstückspindel (30) gegenüberliegt, wobei die mit Werkstück-Spannvorrichtungen (26, 36) versehenen Spindelenden einander zugekehrt sind, und daß die Werkstückspindeln (18, 30) in Richtung der Z-Achse (28) relativ zueinander derart verschiebbar sind, daß ein von einer der Werkstückspindeln gehaltenes Werkstück von der anderen Werkstückspindel übernommen werden kann.

9. Drehmaschine nach einem oder mehreren der vorstehenden Ansprüche, dadurch gekennzeichnet, daß ein zweiter Werkzeugträger (216) bezüglich der Z-Achse (28) dem ersten Werkzeugträger (112) gegenüberliegend angeordnet ist.

10. Drehmaschine nach Anspruch 9, dadurch gekennzeichnet, daß der zweite Werkzeugträger (216) auf einem zweiten Werkzeugträger-Schlitten (214) angeordnet ist, welcher parallel zur Z-Achse (28) sowie parallel zur X-Achse (46) verschiebbar ist.

11. Drehmaschine nach Anspruch 10, dadurch gekennzeichnet, daß die beiden Werkzeugträger-Schlitten (56, 214) an jede der beiden Werkstückspindeln (18, 30) heranfahrbar sind.

12. Drehmaschine nach einem oder mehreren der vorstehenden Ansprüche, dadurch gekennzeichnet, daß der Werkzeugrevolver (112) um mindestens 180° um die Y-Achse (58) schwenkbar ist.

13. Drehmaschine nach einem oder mehreren der Ansprüche 2 bis 12, dadurch gekennzeichnet, daß die zweite Werkzeugaufnahme (142) in Richtung der Schaltachse (116) ausgerichtet ist.

14. Drehmaschine nach Anspruch 13, dadurch gekennzeichnet, daß die zweite Werkzeugaufnahme (142) auf der Schaltachse (116) zentriert ist.

15. Drehmaschine nach einem oder mehreren der vorstehenden Ansprüche, dadurch gekennzeichnet, daß der erste Werkzeugträger-Schlitten (56) als an einem Kreuzschlittensystem (44) in Richtung der Y-Achse (58) verschiebbar geführte Pinole ausgebildet ist und mindestens ein den Werkzeugrevolver (112) tragendes und um die Y-Achse (58) drehbares Teil (84) aufweist.

16. Drehmaschine nach einem oder mehreren der vorstehenden Ansprüche, dadurch gekennzeichnet, daß zumindest ungefähr im Zentrum des Revolverkopfs (114) bzw. der dem Revolverkopf zugewandten Seite des Revolverkörpers (110) eine dritte Werkzeugaufnahme (200) vorgesehen ist.

17. Drehmaschine nach Anspruch 16, dadurch gekennzeichnet, daß die dritte Werkzeugaufnahme (200) auf der Schaltachse (116) zentriert ist.

18. Drehmaschine nach Anspruch 16 oder 17, dadurch gekennzeichnet, daß die dritte Werkzeugaufnahme (200) drehfest am Revolverkopf (114) oder am Revolverkörper (110) angeordnet ist.

19. Drehmaschine nach einem oder mehreren der vorstehenden Ansprüche, dadurch gekennzeichnet, daß die zweite Werkzeugaufnahme (142) als Zapfstelle für ein am Revolverkörper (110) fest anbringbares Zusatzaggregat (250) mit antreibbarem Werkzeug (258) ausgebildet ist.

20. Drehmaschine nach den Ansprüchen 8 und 19, dadurch gekennzeichnet, daß das Zusatzaggregat (250) in mindestens zwei bezüglich der Achse (116) der zweiten Werkzeugaufnahme (142) um 180° versetzten Stellungen am Revolverkörper (110) anbringbar ist.

21. Drehmaschine nach einem oder mehreren der vorstehenden Ansprüche, dadurch gekennzeichnet, daß der Antriebsmotor (74) über mindestens eine schaltbare Kupplung (158; 108) mit dem Revolverkopf (114) zum Drehen des letzteren um die Schaltachse (116) und/oder mit einer Welle (84) zum Schwenken des Werkzeugrevolvers (112) um die Y-Achse (58) verbindbar ist.

22. Drehmaschine nach einem oder mehreren der vorstehenden Ansprüche, gekennzeichnet durch eine schaltbare Blockiervorrichtung (102) zur Verhinderung eines Verschwenkens des Werkzeugrevolvers (112).

23. Drehmaschine nach einem oder mehreren der vorstehenden Ansprüche, dadurch gekennzeichnet, daß der Antriebsmotor (74) mit einer in der Y-Achse (58) liegenden, gegenüber dem Revolverkörper (110) insbesondere unverschiebbaren Antriebswelle (88) in Triebverbindung steht, durch die sowie über Getrieberäder (134, 156) die erste und die zweite Werkzeugaufnahme (118 bzw. 142) antreibbar sind.

24. Drehmaschine nach Anspruch 23, dadurch gekennzeichnet, daß das Übersetzungsverhältnis zwischen zweiter und erster Werkzeugaufnahme (142 bzw. 118) mindestens 2 beträgt und vorzugsweise größer als 2 ist.

25. Drehmaschine nach einem oder mehreren der vorstehenden Ansprüche, dadurch gekennzeichnet, daß die zweite Werkzeugaufnahme (142) mit einer Werkzeug-Spannvorrichtung versehen ist.

26. Drehmaschine nach einem oder mehreren der Ansprüche 16 bis 25, dadurch gekennzeichnet, daß die dritte Werkzeugaufnahme (200) mit einer Werkzeug-Spannvorrichtung versehen ist.

27. Drehmaschine nach Anspruch 25 oder 26, gekennzeichnet durch ein vom ersten Werkzeugträger-Schlitten (56) anfahrbares Werkzeugmagazin (230, 232).

28. Drehmaschine nach einem oder mehreren der vorstehenden Ansprüche, gekennzeichnet durch Steuerungseinrichtungen zum kontinuierlichen und gesteuerten Drehantrieb der zweiten Werkzeugaufnahme (142) in Abhängigkeit von einer kontinuierlichen und gesteuerten Drehung der Werkstückspindel (18 bzw. 30).

## Claims

1. Lathe with a workpiece spindle (18) defining a Z-axis as well as a tool carrier slide (56) bearing a tool carrier in the form of a tool turret (112) having a turret body (110) and a turret head (114), said slide being displaceable in the direction of a first axis (X-axis) extending transversely to the Z-axis, whereby workpiece spindle (18) and tool carrier slide (56) are displaceable relative to one another in the direction of the Z-axis, the tool turret (112) is pivotable about a second axis (Y-axis) likewise extending transversely to the Z-axis as well as transversely to the X-axis and the turret head (114) is mounted on the turret body (110) so as to be rotatable about an indexing axis (116) extending transversely to the Y-axis, and first tool receiving means (118) on the turret head (114) as well as a second tool receiving means (142) borne by the turret body (110) and provided with a drive (74, 88, 132) for a drivable tool (204), characterized in that the second tool receiving means (142) is arranged directly on the turret body (110) on its side facing away from the turret head (114), that the turret head (114) has at least one first tool receiving means (118) provided with a drive (74, 88, 132, 156, 152) for a drivable tool (154) and that a common drive motor (74) is provided for all the drivable tools (154, 204).

2. Lathe as defined in claim 1, characterized in that the second tool receiving means (142) is arranged on the turret body (110) such that a tool (204) held by this second tool receiving means (142) points away from the turret head (114).

3. Lathe as defined in claim 1 or 2, characterized in that workpiece spindle (18) and tool turret (112) are displaceable relative to one another in the direction of or parallel to the Y-axis (58).

4. Lathe as defined in any or several of claims 1 to 3, characterized in that the tool turret (112) is pivotable about the Y-axis (58) through at least 90°.

5. Lathe as defined in any or several of claims 1 to 4, characterized in that the drive (132) for the second tool receiving means (142) has a higher torque than the drive (152) for the first tool receiving means (118).

6. Lathe as defined in any or several of the preceding claims, characterized in that the tool carrier slide (56) is displaceable parallel to the Z-axis (28).

7. Lathe as defined in any or several of claims 1 to 6, characterized in that the tool carrier slide (56) is displaceable in the direction of the Y-axis (58).

8. Lathe as defined in any or several of the preceding claims, characterized in that a second workpiece spindle (30) is located opposite the first workpiece spindle (18) in the direction of the Z-axis (28), whereby the spindle ends provided with workpiece clamping devices (26, 36) face one another, and that the workpiece spindles (18, 30) are displaceable relative to one another in the direction of the Z-axis (28) such that a workpiece held by one of the workpiece spindles can be taken over by the other workpiece spindle.

9. Lathe as defined in any or several of the preceding claims, characterized in that a second tool carrier (216) is arranged opposite the first tool carrier (112) in relation to the Z-axis (28).

10. Lathe as defined in claim 9, characterized in that the second tool carrier (216) is arranged on a second tool carrier slide (214) displaceable parallel to the Z-axis (28) as well as parallel to the X-axis (46).

11. Lathe as defined in claim 10, characterized in that the two tool carrier slides (56, 214) are adapted to be moved up to each of the two workpiece spindles (18, 30).

12. Lathe as defined in any or several of the preceding claims, characterized in that the tool turret (112) is pivotable about the Y-axis (58) through at least 180°.

13. Lathe as defined in any or several of claims 2 to 12, characterized in that the second tool receiving means (142) is aligned in the direction of the indexing axis (116).

14. Lathe as defined in claim 13, characterized in that the second tool receiving means (142) is centered on the indexing axis (116).

15. Lathe as defined in any or several of the preceding claims, characterized in that the first tool carrier slide (56) is designed as a sleeve-guided slide guided on a cross-slide system (44) for displacement in the direction of the Y-axis (58) and has at least one part (84) bearing the tool turret (112) and rotatable about the Y-axis (58).

16. Lathe as defined in any or several of the preceding claims, characterized in that a third tool receiving means (200) is provided at least approximately in the centre of the turret head (114) or the side of the turret body (110) facing the turret head.

17. Lathe as defined in claim 16, characterized in that the third tool receiving means (200) is centered on the indexing axis (116).

18. Lathe as defined in claim 16 or 17, characterized in that the third tool receiving means (200) is non-rotatably arranged on the turret head (114) or the turret body (110).

19. Lathe as defined in any or several of the preceding claims, characterized in that the second tool receiving means (142) is designed as a drive coupling means for an auxiliary unit (250) with drivable tool (258), said unit being securely attachable to the turret body (110).

20. Lathe as defined in claims 8 and 19, characterized in that the auxiliary unit (250) is attachable to the turret body (110) in at least two positions offset through 180° in relation to the axis (116) of the second tool receiving means (142).

21. Lathe as defined in any or several of the preceding claims, characterized in that the drive motor (74) is connectable with the turret head (114) via at least one actuatable coupling (158; 108) for rotating the turret head about the indexing axis (116) and/or is connectable with a shaft (84) for swivelling the tool turret (112) about the Y-axis (58).

22. Lathe as defined in any or several of the preceding claims, characterized by an actuatable blocking device (102) for preventing swivelling of the tool turret (112).

23. Lathe as defined in any or several of the preceding claims, characterized in that the drive motor (74) is in drive connection with a drive shaft (88) located in the Y-axis (58) and being, in particular, non-displaceable in relation to the turret body (110), the first and the second tool receiving means (118 and 142, respectively) being drivable via said drive connection as well as via gear wheels (134, 156).

24. Lathe as defined in claim 23, characterized in that the transmission ratio between second and first tool receiving means (142 and 118, respectively) is at least 2 and preferably greater than 2.

25. Lathe as defined in any or several of the preceding claims, characterized in that the second tool receiving means (142) is provided with a tool clamping device.

26. Lathe as defined in any or several of claims 16 to 25, characterized in that the third tool receiving means (200) is provided with a tool clamping device.

27. Lathe as defined in claim 25 or 26, characterized by a tool magazine (230, 232) approachable by the first tool carrier slide (56).

28. Lathe as defined in any or several of the preceding claims, characterized by control means for the continuous and controlled rotary drive of the second tool receiving means (142) as a function of a continuous and controlled rotation of the workpiece spindle (18 or 30).

## Revendications

1. Tour, comprenant une broche (18) qui définit un axe Z, et comprenant un chariot porte-outils (56) qui porte un porte-outils sous la forme d'un revolver à outils (112) comportant un corps de revolver (110) et une tête de revolver (114), et ledit chariot pouvant être déplacé dans la direction d'un premier axe (axe X) perpendiculaire à l'axe Z, la broche (18) et le chariot porte-outils (56) pouvant être déplacés l'un par rapport à l'autre dans la direction de l'axe Z, le revolver à outils (112) pouvant être pivoté autour d'un second axe (axe Y) également perpendiculaire à l'axe Z, et perpendiculaire à l'axe X, et la tête de revolver (114) étant montée sur le corps de revolver (110) de façon à pouvoir tourner autour d'un axe de changement (116) perpendiculaire à l'axe Y, et comportant des premiers récepteurs à outils (118) sur la tête de revolver (114), ainsi qu'un second récepteur à outils (142) porté par le corps de revolver (110), ce second récepteur à outils étant pourvu d'un entraînement (74, 88, 132) pour un outil entraîné (204), caractérisé en ce que le second récepteur à outils (142) est agencé directement sur le corps de revolver (110) du côté de celui-ci détourné de la tête de revolver (114), en ce que la tête de revolver (114) comporte au moins un premier récepteur à outils (118) pourvu d'un entraînement (74, 88, 132, 156, 152) pour un outil entraîné (54), et en ce qu'il est prévu un moteur d'entraînement commun (74) pour tous les outils entraînés (154, 204).

2. Tour selon la revendication 1, caractérisé en ce que le second récepteur à outils (142) est agencé sur le corps de revolver (110) de telle manière qu'un outil (204) retenu par ce second récepteur à outils (142) va en s'éloignant de la tête de revolver (114).

3. Tour selon l'une ou l'autre des revendications 1 et 2, caractérisé en ce que la broche (18) et le revolver à outils (112) peuvent être déplacés l'un par rapport à l'autre en direction de l'axe Y (58), ou parallèlement à celui-ci.

4. Tour selon l'une ou plusieurs des revendications 1 à 3, caractérisé en ce que le revolver à outils (112) peut être pivoté d'au moins 90° autour de l'axe Y (58).

5. Tour selon l'une ou plusieurs des revendications 1 à 4, caractérisé en ce que l'entraînement (132) pour le second récepteur à outils (142) assure un couple de rotation supérieur à l'entraînement (152) pour le premier récepteur à outils (118).

6. Tour selon l'une ou plusieurs des revendications précédentes, caractérisé en ce que le chariot porte-outils (56) peut être déplacé parallèlement à l'axe Z (28).

7. Tour selon l'une ou plusieurs des revendications 1 à 6, caractérisé en ce que le chariot porte-outils (56) peut être déplacé en direction de l'axe Y (58).

8. Tour selon l'une ou plusieurs des revendications précédentes, caractérisé en ce qu'une seconde broche (30) est située à l'opposé de la première broche (18) dans la direction de l'axe Z (28), les extrémités des broches pourvues de dispositifs de serrage de pièces (26, 36) étant dirigées l'une vers l'autre, et en ce que les broches (18, 30) peuvent être déplacées l'une par rapport à l'autre dans la direction de l'axe Z (28) de telle façon qu'une pièce retenue par l'une des broches peut être reprise par l'autre broche.

9. Tour selon l'une ou plusieurs des revendications précédentes, caractérisé en ce qu'un second porte-outils (216) est agencé à l'opposé du premier porte-outils (112) par rapport à l'axe Z (28).

10. Tour selon la revendication 9, caractérisé en ce que le second porte-outils (216) est agencé sur un second chariot porte-outils (214), lequel peut être déplacé parallèlement à l'axe Z (28) et parallèlement à l'axe X (46).

11. Tour selon la revendication 10, caractérisé en ce que les deux chariots porte-outils (56, 214) peuvent être amenés vers chacune des deux broches (18, 30).

12. Tour selon l'une ou plusieurs des revendications précédentes, caractérisé en ce que le revolver à outils (112) peut être pivoté d'au moins 180° autour de l'axe Y (58).

13. Tour selon l'une ou plusieurs des revendications 2 à 12, caractérisé en ce que le second récepteur à outils (142) est dirigé dans la direction de l'axe de changement (116).

14. Tour selon la revendication 13, caractérisé en ce que le second récepteur à outils (142) est centré sur l'axe de changement (116).

15. Tour selon l'une ou plusieurs des revendications précédentes, caractérisé en ce que le premier chariot porte-outils (56) est réalisé sous la forme d'une douille de broche guidée en déplacement en direction de l'axe Y (58) sur un système à chariots croisés (44), et comporte au moins une pièce (84) qui porte le revolver à outils (112) qui est capable de tourner autour de l'axe Y (58).

16. Tour selon l'une ou plusieurs des revendications précédentes, caractérisé en ce qu'il est prévu au moins approximativement au centre de la tête de revolver (114), ou du côté du corps de revolver (110) dirigé vers la tête de revolver, un troisième récepteur à outils (200).

17. Tour selon la revendication 16, caractérisé en ce que le troisième récepteur à outils (200) est centré sur l'axe de changement (116).

18. Tour selon l'une ou l'autre des revendications 16 et 17, caractérisé en ce que le troisième récepteur à outils (200) est agencé solidairement en rotation sur la tête de revolver (114) ou sur le corps de revolver (110).

19. Tour selon l'une ou plusieurs des revendications précédentes, caractérisé en ce que le second récepteur à outils (142) est réalisé sous la forme d'un tenon de prise pour un ensemble additionnel (250) avec un outil entraîné (258), qui peut être monté solidairement sur le corps de revolver (110).

20. Tour selon les revendications 8 et 19, caractérisé en ce que l'ensemble additionnel (250) peut être monté sur le corps de revolver (110) en au moins deux positions décalées de 180° par rapport à l'axe (116) du second récepteur à outils (142).

21. Tour selon l'une ou plusieurs des revendications précédentes, caractérisé en ce que le moteur d'entraînement (74) peut être raccordé via au moins un accouplement commutable (158 ; 108) à la tête de revolver (114) afin de faire tourner cette dernière autour de l'axe de changement (116), et/ou peut être raccordé à un arbre (84) pour faire pivoter le revolver à outils (112) autour de l'axe Y (58).

22. Tour selon l'une ou plusieurs des revendications précédentes, caractérisé en ce qu'il comprend un dispositif de blocage commutable (102) afin d'empêcher un pivotement du revolver à outils (112).

23. Tour selon l'une ou plusieurs des revendications précédentes, caractérisé en ce que le moteur d'entraînement (74) est en liaison motrice avec un arbre moteur (88) situé dans l'axe Y (58), et en particulier sans possibilité de se déplacer par rapport au corps de revolver (110), le premier et le second récepteur à outils (118, 142) pouvant être entraînés par l'intermédiaire de roues de transmission (134, 156).

24. Tour selon la revendication 23, caractérisé en ce que le rapport de transmission entre le second et le premier récepteur à outils (142 ; 118) est au moins égal à 2 et de préférence supérieur à 2.

25. Tour selon l'une ou plusieurs des revendications précédentes, caractérisé en ce que le second récepteur à outils (142) est doté d'un dispositif de serrage d'outils.

26. Tour selon l'une ou plusieurs des revendications 16 à 25, caractérisé en ce que le troisième récepteur à outils (200) est doté d'un dispositif de serrage d'outils.

27. Tour selon l'une ou l'autre des revendications 25 et 26, caractérisé en ce qu'il comporte un magasin à outils (230, 232) vers lequel le chariot porte-outils (56) est capable de se déplacer.

28. Tour selon l'une ou plusieurs des revendications précédentes, caractérisé par des organes de commande afin d'assurer un entraînement en rotation continu et commandé du second récepteur à outils (142) en fonction d'une rotation continue et commandée des broches (18 ; 30).
